(19) Europäisches Patentamt
European Patent Office
Office européen des brevets

(11) **EP 4 516 749 A1**

(12) **EUROPEAN PATENT APPLICATION**
published in accordance with Art. 153(4) EPC

(43) Date of publication:
**05.03.2025 Bulletin 2025/10**

(21) Application number: **23796292.3**

(22) Date of filing: **21.04.2023**

(51) International Patent Classification (IPC):
**C03B 33/09** (2006.01)   **B23K 26/53** (2014.01)

(52) Cooperative Patent Classification (CPC):
**B23K 26/53; C03B 33/09**

(86) International application number:
**PCT/JP2023/016027**

(87) International publication number:
**WO 2023/210552 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 JP 2022072576**

(71) Applicant: **AGC INC.**
**Chiyoda-ku,**
**Tokyo 1008405 (JP)**

(72) Inventors:
• **SHIBATA, Akihiro**
  **Tokyo 100-8405 (JP)**
• **SAITO, Isao**
  **Tokyo 100-8405 (JP)**
• **FUJIWARA, Takuma**
  **Tokyo 100-8405 (JP)**
• **IIDA, Ryoichi**
  **Tokyo 100-8405 (JP)**
• **ONO, Takeaki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING GLASS ARTICLE, AND GLASS ARTICLE**

(57)    The present invention provides a glass article that is appropriately cut out, and in which cracks are inhibited from occurring in a fracture surface. This method for producing a glass article comprises: irradiating a base material (10) with pulsed oscillation laser light along a virtual line (T) set in the main surface (10A) of the base material (10) to form a plurality of modified portions (H) in the base material (10) along the virtual line (T); and breaking the base material (10) using the modified portions (H) along the virtual line (T) as starting points, to cut out a portion of the base material (10), thereby obtaining a glass article. The minimum pulse interval of the laser light is more than 1 μs, and the pulse width of the laser light is 15-100 ps.

FIG. 4

**Description**

TECHNICAL FIELD

The present invention relates to a method for producing a glass article and a glass article.

BACKGROUND ART

There is known a method for cutting out a glass article from a glass base material by irradiating the base material with laser light to form a plurality of modified portions and breaking the base material along the plurality of modified portions. For example, Patent Literature 1 describes that a glass plate is perforated by burst-mode laser light and fractured. The burst mode is a method of outputting a pulse group having a plurality of pulsed lights, which is called burst, at a predetermined period. By using the burst mode, the glass plate can be appropriately perforated.

CITATION LIST

PATENT LITERATURE

Patent Literature 1: JP6552503B

SUMMARY OF INVENTION

TECHNICAL PROBLEM

However, for example, in the case of using the burst mode, since the pulsed light is emitted a plurality of times to nearby places, a breaking surface obtained by breaking along the modified portion is exposed to a large number of shock waves, which may cause cracks to occur in the breaking surface. Hence, it is required to provide a glass article which is appropriately cut and in which cracks are inhibited from occurring on a breaking surface.
The present invention has been made in view of the above problem, and an object thereof is to provide a method for producing a glass article which is appropriately cut and in which cracks are inhibited from occurring on a breaking surface, and a glass article.

SOLUTION TO PROBLEM

A method for producing a glass article according to the present disclosure includes: irradiating pulse-oscillated laser light along a virtual line set on a main surface of a base material to form a plurality of modified portions along the virtual line in the base material; and breaking the base material with the modified portions along the virtual line as starting points to cut out a portion from the base material and obtain a glass article, in which a minimum pulse interval of the laser light is more than 1 $\mu$s, and a pulse width of the laser light is 15 ps or more and 100 ps or less.
A glass article according to the present disclosure is a glass article having a main surface and an end surface, in which a plurality of linear modified portions extending in a thickness direction of the glass article are formed in the end surface, and a surface roughness Sa of the end surface, as specified in ISO 25178, is 0.6 $\mu$m or less.

ADVANTAGEOUS EFFECTS OF INVENTION

According to the present invention, it is possible to provide a glass article which is appropriately cut and in which cracks are inhibited from occurring in a breaking surface.

BRIEF DESCRIPTION OF DRAWINGS

FIG. 1 is a schematic cross-sectional view of a base material.

FIG. 2 is a schematic view illustrating an example of an output waveform of burst-mode laser light.

FIG. 3 is a schematic view illustrating an example of an output waveform of laser light according to the present embodiment.

FIG. 4 is a schematic view for explaining formation of a modified portion.

FIG. 5 is a schematic view for explaining formation of a modified portion.

FIG. 6 is a schematic view for explaining formation of a modified portion.

FIG. 7 is a schematic view of a glass article.

FIG. 8 is a schematic view illustrating an end surface of the glass article.

FIG. 9 is a schematic view illustrating an example of a chamfered end surface.

FIG. 10 is a schematic view illustrating an on-vehicle display according to the present embodiment.

FIG. 11 is a schematic view illustrating cutting out of a base material in Examples.

FIG. 12 is a graph illustrating a correlation between a pulse width and a pitch in a non-burst mode of Experiment 3.

DESCRIPTION OF EMBODIMENTS

Preferred embodiments of the present invention will be described below in detail with reference to the accompanying drawings. The present invention is not limited to these embodiments and also includes one constituted by a combination of the embodiments when there are a plurality of embodiments. In addition, numerical values include rounding ranges.

In the present specification, "mass" is synonymous with "weight".

In the present embodiment, a base material 10 is irradiated with laser light L to form modified portions H on the base material 10, and the base material 10 is broken with modified portions H as starting points, so that a glass article 100 is cut out from the base material 10. The base material 10, a method for producing the glass article 100 from the base material 10, and the glass article 100 will be described below.

(Base Material)

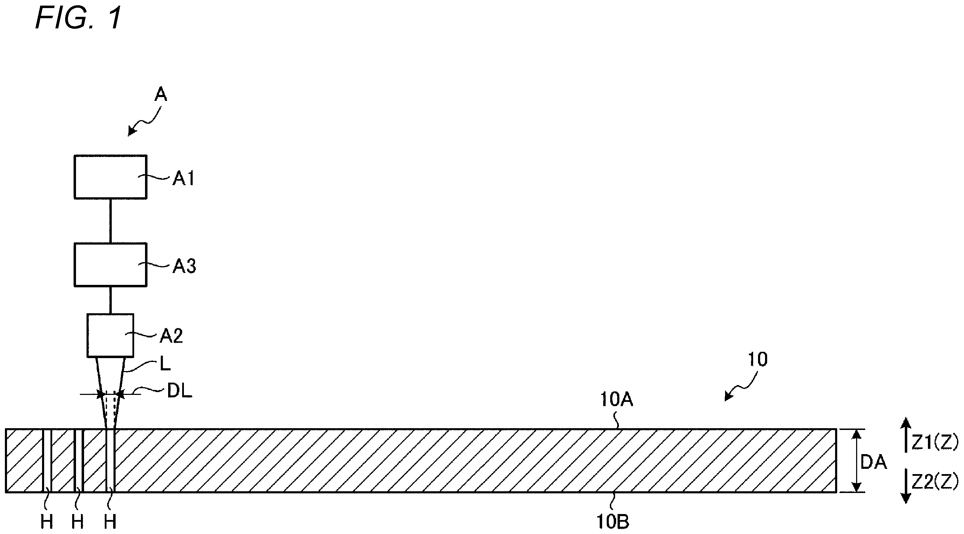

FIG. 1 is a schematic cross-sectional view of a base material. As illustrated in FIG. 1, the base material 10 is a transparent sheet-shaped member. The sheet shape as used herein is not limited to a flat sheet shape and may indicate that a width of a main surface is greater than a thickness, and the term "transparent" as used herein may refer to transmitting visible light. Hereinafter, one main surface of the base material 10 is referred to as a main surface 10A, a main surface opposite to the main surface 10A is referred to as a main surface 10B, a thickness direction of the base material 10, that is, a direction connecting the main surface 10B and the main surface 10A is referred to as a Z direction. In the Z direction, an orientation from the main surface 10B to the main surface 10A is defined as a direction Z1, and an orientation from the main surface 10B to the main surface 10A is defined as a direction Z2. In the example of FIG. 1, the base material 10 has a rectangular flat sheet shape when viewed from the Z direction, and the base material 10 may be of any shape. For example, the base material 10 is not limited to the rectangular shape when viewed from the Z direction and may be of a polygonal shape, a circular shape, an elliptical shape, or the like. In the example of FIG. 1, the base material 10 has a flat sheet shape, but is not limited to this, and may have a shape in which a flat sheet is curved. That is, the base material 10 may have a curved surface shape in which the main surfaces 10A and/or 10B are convex in the Z direction. In the case where the main surfaces 10A and/or 10B of the base material 10 are curved to be convex in the Z direction, a curvature radius of the main surfaces 10A and/or 10B of the base material 10 is preferably 10000 mm or less, more preferably 5000 mm or less, and still more preferably 3000 mm or less. In the case where the main surfaces 10A and/or 10B of the base material 10 are curved to be convex in the Z direction, the curvature radius of the main surfaces 10A and/or 10B of the base material 10 is preferably 10 mm or more, more preferably 50 mm or more, still more preferably 100 mm or more, and yet still more preferably 200 mm or more. That is, the curvature radius of the main surfaces 10A and/or 10B of the base material 10 is preferably in the range of 10 mm to 10000 mm.

A thickness DA of the base material 10 is preferably 0.1 mm or more, more preferably 0.7 mm or more, and still more preferably 1.1 mm or more. Further, the thickness DA of the base material 10 is preferably 0.7 mm or more and 5 mm or less, and more preferably 1.1 mm or more and 3 mm or less. According to the production method of the present embodiment, it is possible to inhibit cracks on a breaking surface while appropriately cutting such a relatively thick base material 10. The thickness DA of the base material 10 refers to a length from the main surface 10A to the main surface 10B in the Z direction.

The base material 10 has a fracture toughness value $K_{IC}$ of preferably 0.6 (MPa·m$^{0.5}$) or more, more preferably 0.6 (MPa·m$^{0.5}$) or more and 1.00 (MPa·m$^{0.5}$) or less, and still more preferably 0.65 (MPa·m$^{0.5}$) or more and 0.70 (MPa·m$^{0.5}$) or less. A glass having the fracture toughness value $K_{IC}$ of 0.6 (MPa·m$^{0.5}$) or more is difficult to cut by the method in related art, but according to this production method, the cracks on the breaking surface can be inhibited while appropriately cutting the base material 10 having the fracture toughness value $K_{IC}$ in this range. The fracture toughness value $K_{IC}$ can be measured, for example, by the Double Cleavage Drilled Compression (DCDC) method described in Non-Patent Literature (NEW GLASS Vol. 15 No. 22000 p18).

The base material 10 is preferably a glass and more preferably an alkali glass containing an alkali metal component. The base material 10 is the same material as the glass article 100 described later. Further, as described later, the base material 10 is preferably a glass before chemical strengthening, and the glass article 100 is preferably a glass after chemical strengthening. However, in the case where the glass article 100 is chemically strengthened as described later, a composition of the base material 10 corresponds to a composition of a central portion of the glass article 100 in a sheet thickness direction. Specifically, when an element substituted and released in chemical strengthening is referred to by a pre-substitution element and an element substituted and taken in by chemical strengthening is referred to by a substitution element, the glass article 100 can be said to have a composition in which the pre-substitution element is contained in place of the substitution element on a chemically strengthened surface layer of the glass article 100.

(Method for Producing Glass Article)

Next, a method for producing the glass article 100 from the base material 10 will be described. As illustrated in FIG. 1, in this production method, the modified portions H are formed in the base material 10 by irradiating the main surface 10A of the base material 10 with the laser light L from an irradiation device A. Each of the modified portions H is a layer in which a density or a refractive index is changed due to a structural change of the glass or due to melting and re-solidification of the glass. The modified portion H may include voids. With the laser light L, the modified portion H is formed by nonlinear absorption, for example. The nonlinear absorption is also called multiphoton absorption. The probability that the multiphoton absorption occurs is nonlinear with respect to a photon density (power density of the laser light L), and the higher the photon density, the higher the probability dramatically. For example, the probability that two-photon absorption occurs is proportional to a square of the photon density.

A portion of the base material 10 in which at least one of the density, refractive index, asymmetric electron density, or fictive temperature is different from that of a portion of the base material 10 in which the modified portion H is not formed (portion which is not irradiated with the laser light L) may be set as the modified portion H. The portion in which the modified portion H is not formed may refer to, for example, a position separated from a virtual line T described later by 10 mm or more when viewed from the Z direction.

(Configuration of Irradiation Device)

As illustrated in FIG. 1, the irradiation device A includes a light source unit A1, an optical system A2, and a scanning mechanism A3. The light source unit A1 is a light source that generates the laser light L. The light source unit A1 may be any one, and may use, for example, a YAG crystal (Nd: YAG) doped with Nd. The optical system A2 is provided on a traveling direction side of the laser light L with respect to the light source unit A1, and the laser light L from the light source unit A1 is incident thereon. The optical system A2 emits the incident laser light L toward the main surface 10A. The scanning mechanism A3 is a mechanism that scans (sweeps) the laser light L. That is, the scanning mechanism A3 scans (moves) an irradiation position, which is a position of the laser light L irradiated on the main surface 10A, in a direction parallel to the main surface 10A. The scanning mechanism A3 may be any mechanism as long as the laser light L can be scanned, and may be, for example, a galvano mirror. The configuration of the irradiation device A is not limited to the above description and may be any configuration capable of irradiating the laser light L while scanning the irradiation position in the direction parallel to the main surface 10A. Examples thereof include a configuration in which a position of a laser head from which the laser light L is emitted, such as the light source unit A1 or the optical system A2, is fixed and the irradiation position is scanned by moving the base material 10 irradiated with the laser light L. That is, it can be said that the irradiation position may be scanned by moving a relative position between a spot position of the laser light L and the base material 10.

The scanning of the laser light L is not limited to the direction parallel to the main surface 10A, and may be performed in a direction perpendicular to the main surface 10A, that is, in a thickness direction of the glass article 100. For example, when the thickness of the glass article 100 is 3 mm or more, the stress required at the time of breaking is easily reduced by scanning in the thickness direction. On the other hand, when the thickness of the glass article 100 is less than 3 mm, it is preferable to form a modified portion by one time pulse irradiation without scanning in the thickness direction. That is, each modified portion is preferably formed by one time pulse irradiation (one shot). By forming the modified portion by one time irradiation, it is possible to inhibit a decrease in cross-section quality, such as an increase in roughness of a cut surface or an increase in latent scratches due to occurrence of a deviation in the irradiation position for each pulse and occurrence of a step in a cross section.

The laser light L may be focused linearly by self-focusing due to a nonlinear Kerr effect, or may be focused linearly by the optical system A2. As a specific optical system A2 in this case, for example, an optical system using an Axicon lens, an optical system using a birefringent material, an optical system using a diffractive optical element, or an optical system using optical aberration can be used.

In particular, the optical system A2 that emits the laser light L is preferably an aberration optical system that generates an aberration. Since the aberration optical system is excellent in robustness against misalignment of optical axes between optical elements, even if the misalignment of the optical axes between the optical elements occurs to some extent due to disturbance such as vibration and thermal contraction of the device, there is little risk that light intensity distribution at a processing point is disturbed and the cutting quality is deteriorated, and the cross-section quality is stabilized over the long term. Hence, from the viewpoint of production yield, the optical system 2A is preferably an aberration optical system.

A polarization state of the laser light L may be any of linearly polarized light, elliptically polarized light, circularly polarized light, radially polarized light, or azimuthally polarized light. The polarization state affects the reflectance when the laser light is incident on the main surface A. Hence, an intensity of the laser light penetrating into the base material can be controlled by a combination of the polarization state and an incident angle, and light convergence distribution of the laser light inside the base material can be adjusted.

For example, the symmetry in the circumferential direction can be intentionally broken by the incidence of linearly polarized light or elliptically polarized light. By breaking the symmetry of the light convergence distribution of the laser light, the symmetry of the modified portion can be controlled, and the divisibility of the base material can be improved by aligning with a direction of a planned cutting line. By making the direction of high divisibility coincide with the planned cutting line, it is possible to divide with less laser input energy, and as a result, it is possible to reduce cracks in the breaking surface after breaking, and to realize high-quality cutting.

Further, the incidence of circularly polarized light can maintain isotropy without breaking the symmetry in the circumferential direction.

Although the symmetry of the laser light may be broken due to imperfections of the laser light source or the transmission optical system, the breakdown of the symmetry can be counteracted and complemented by controlling a direction of linearly or elliptically polarized light.

By using the radially polarized light, or azimuthally polarized light, radial intensity distribution can be influenced.

In addition, when the polarization state is changed, in addition to the reflectance at the main surface A described above, a light absorption rate at a light convergence point is also affected. This is because the light absorption rate when atoms constituting the base material absorb the energy of the laser light at the light convergence point and approach a critical electron density is affected by the polarization state.

(Laser Light)

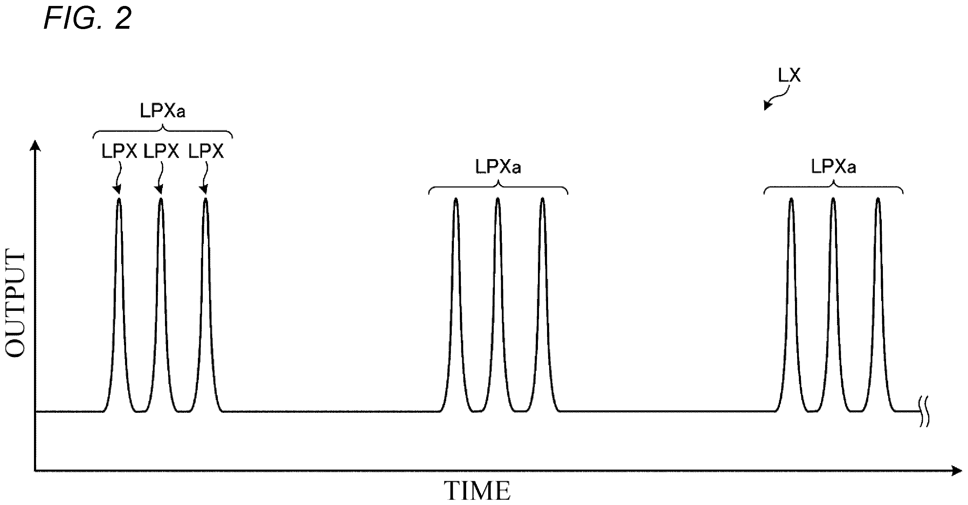

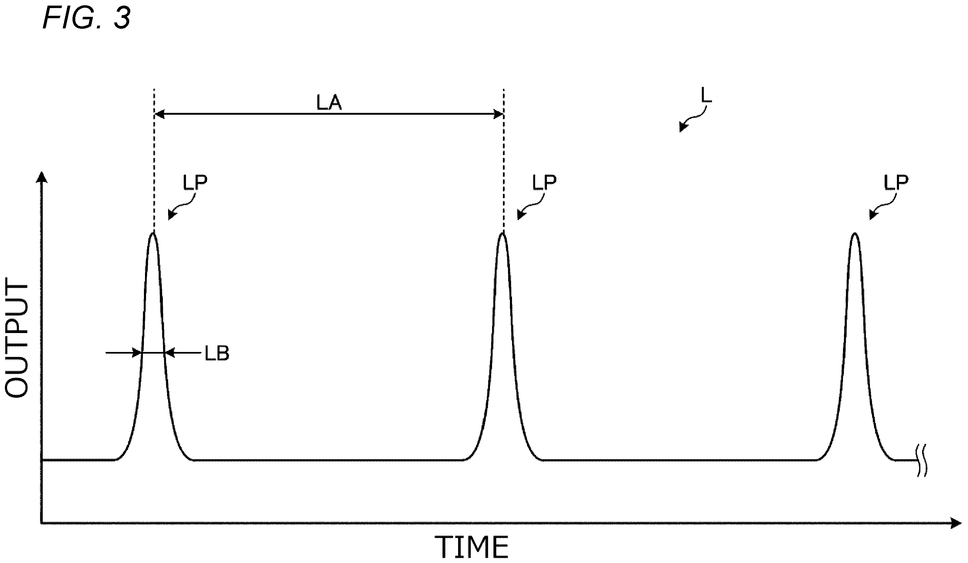

FIG. 2 is a schematic view illustrating an example of an output waveform of burst-mode laser light, and FIG. 3 is a schematic view illustrating an example of an output waveform of laser light according to the present embodiment. The laser light L emitted from the irradiation device A has a pulse shape, and may also be referred to as pulse-oscillated laser light (pulsed laser). The laser light L according to the present embodiment is non-burst-mode laser light, in other words, laser light that is pulse oscillated in a mode other than the burst mode.

FIG. 2 illustrates an example of a waveform of burst-mode laser light LX. In FIG. 2, the horizontal axis represents time, and the vertical axis represents an output (W) of the laser light. As illustrated in FIG. 2, the burst-mode laser light LX refers to laser light in which a pulse group LPXa having a plurality of small pulsed lights LPX output at a short period is output at a predetermined period. Here, the period between the small pulsed lights LPX in one pulse group LPXa, that is, an interval (time width) between the small pulsed lights LPX in one pulse group LPXa is usually set to, for example, about several hundred ps to several tens of ns.

On the other hand, the irradiation device A according to the present embodiment outputs non-burst-mode laser light L. As illustrated in FIG. 3, the non-burst-mode laser light L has no pulse group, and one pulsed light LP is output at a predetermined period. Here, assuming that an interval (time width) between the pulsed lights LP adjacent to each other in time series is an interval LA, when the laser light L is of the non-burst mode, a minimum value of the intervals LA between the respective pulsed lights LP is larger than 1 $\mu$s. As in the example of FIG. 2, since the minimum value of the intervals between the small pulsed lights LPX in the burst-mode laser light LX is the interval between the small pulsed lights LPX in one pulse group LPXa, the condition that the minimum value is larger than 1 $\mu$s is not satisfied. As illustrated in FIG. 3, the interval LA of the laser light L may be, for example, an interval (time width) between timings at which the outputs of the pulsed lights LP adjacent to each other in time series have a maximum value.

As a result, in the case of a burst pulse, regions irradiated with the small pulses LPX overlap in one pulse group LPXa, whereas in the case of a non-burst pulse, regions irradiated with the pulses LP do not overlap. In the present embodiment, since the regions irradiated with the pulses LP do not overlap, it is possible to reduce the number of times the irradiation region is subjected to shock waves, and to inhibit the generation of cracks around the modified portion formed by the irradiation.

The irradiation device A sets a width (pulse width) LB of the laser light L to 15 ps or more and 100 ps or less.

As illustrated in FIG. 2, the width LB of the laser light L may refer to a half width of the pulsed light LP of the laser light L (interval between two points at which an intensity of the pulsed light LP is half a peak). When the width LB is within this range, it is possible to appropriately form the modified portion H in the base material 10 to inhibit cracks in the breaking surface while appropriately cutting the base material 10.

The laser light irradiated to the inside of the base material transfers energy to valence electrons of the atoms constituting the base material by multiphoton absorption, thereby increasing the number of free electrons. Hence, an electron density of the base material increases during the time width LB during which the laser light is irradiated. Since the free electrons absorb single photons as well as multi-photons, when the electron density starts to increase, the light absorption rate also increases, so that the electron density further increases and increases at an accelerated rate. When the electron density increases and exceeds the critical electron density, resulting in an overdense plasma state, the electrons exhibit an effect like a mirror with respect to light, reflect most of the laser light, and do not absorb energy. Hence, during the time within the width LB of the laser light L after the electron density exceeds the critical electron density, it becomes impossible to sufficiently obtain energy of the laser light.

On the other hand, since the energy of the free electrons is converted into lattice vibration energy by phonon coupling in a time period of 1 ps to 10 ps, the electron density decreases.

Hence, in order to apply sufficient energy to the base material to form the modified portion, it is necessary to design the width LB of the laser light L and pulse energy so as to control the rate of increase and decrease of the electron density so that the critical electron density is not exceeded. In particular, when attempting to implement the method of the present application in which the modified portion is formed only by the energy of the single pulsed light without using a burst pulse, an amount of energy to be input by the single pulsed light is larger than that of the burst mode in the related art in which the energy of a plurality of pulses is added. Hence, only by increasing the pulse energy amount according to the knowledge in the related art, the critical electron density is easily exceeded, resulting in a problem in that sufficient energy cannot be absorbed. In order to solve this problem, the inventors of the present application have found that it is necessary to precisely control the electron density described above, and could solve the problem by designing the width LB.

Specifically, when the width LB is set to 15 ps or more that is larger than 1 ps to 10 ps, which is a phonon coupling time, it is possible to inhibit the rate of increase in the electron density, to balance with the rate of decrease in the electron density due to the conversion of the lattice vibration energy, and to maintain the electron density in a certain range without exceeding the critical electron density during the width LB. Accordingly, the energy of the input laser light can be absorbed sufficiently. On the other hand, when the width LB is set to be more than 100 ps, the photon density of the laser light decreases, so that the occurrence probability of multiphoton absorption decreases and the electron density does not sufficiently increase. Hence, by setting the width LB of the laser light L to 15 ps or more and 100 ps or less, the base material can be appropriately cut.

Further, the width LB and a pitch P preferably satisfy the following relationship.

$$P \le 0.25 \times LB + 3.5$$

Here, P is a numerical value expressed in unit of $\mu$m, and LB is a numerical value expressed in unit of ps.

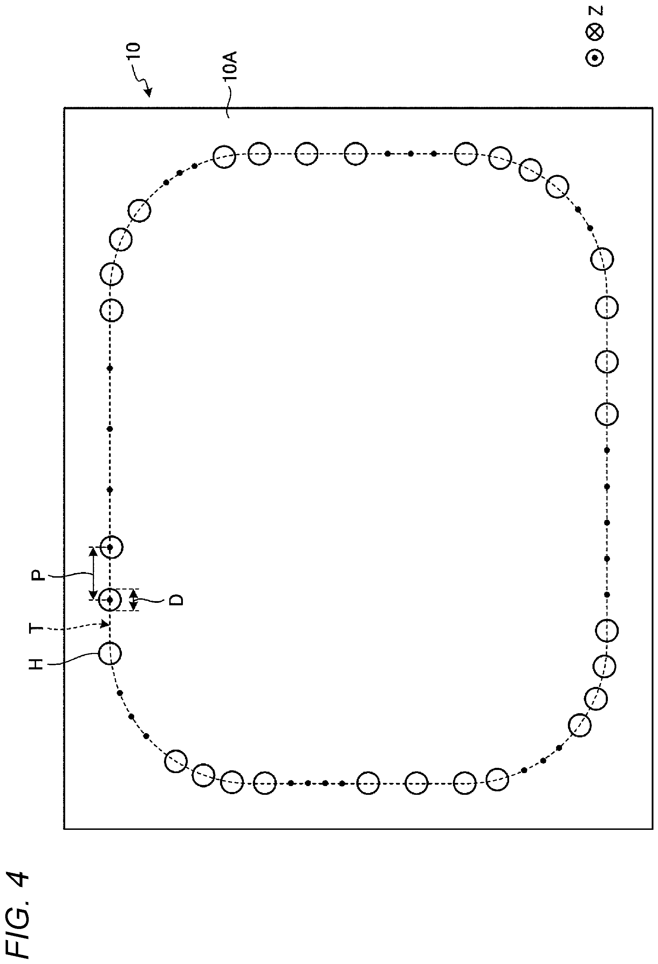

As illustrated in FIG. 4, the pitch P is a distance between centers of adjacent modified portions H along the virtual line T when viewed from the Z direction.

The above formula is preferably satisfied since a maximum stress at the time of breaking the base material (hereinafter, referred to as breaking stress) can be 25 MPa or less. The breaking stress is preferably 25 MPa or less since it is possible to perform cutting with a good yield even in the case of a curve having a small curvature radius.

Here, the relation between the pitch P and the width LB will be described. As described above, by setting the pulse width to be sufficiently larger than 1 ps to 10 ps which is the phonon coupling time, it is possible to inhibit an increase in the density of excited electrons and increase the amount of energy converted into lattice vibrations. When the lattice vibration energy increases, a band gap decreases, and single photon absorption becomes easy. Hence, in portions irradiated with the laser light, the lattice vibration energy increases, that is, the temperature increases. In a portion to which the incident laser light first comes into contact among the portions whose temperature increases, a light absorption amount increases, so that the temperature further increases and a volume of the modified portion increases. Since this phenomenon becomes more remarkable as the pulse width increases, it is considered that the volume of the modified portion increases as the pulse width increases. As a result, even if an irradiation pitch is widened, the breaking stress can be kept low.

Further, the irradiation device A preferably sets the width LB of the laser light L to 15 ps or more and 60 ps or less. The width LB of 60 ps or less makes it possible to reduce surface roughness of the breaking surface after breaking of the base material 10 and obtain a high-quality cut surface.

The width LB is more preferably 55 ps or less, still more preferably 50 ps or less, and yet still more preferably 45 ps or less. Further, the width LB is preferably 20 ps or more.

For example, the irradiation device A may emit the laser light L having a width (half width of the pulsed light) smaller than the above range from the light source unit A1, cause the optical system A2 to expand the width of the laser light L so as to fall within the above range, and irradiate the base material 10 with the laser light L. In this case, the width of the laser light L emitted from the light source unit A1 may be, for example, fs (femtosecond) order.

The width LB can be measured by a pulse width measurement device for ultrashort pulses such as an autocorrelator, FROG, and SPIDER.

Here, energy (J) of one pulsed light LP of the laser light L per 1 mm thickness of the base material 10 to be irradiated with the laser light L is defined as unit energy. That is, the unit energy can be said to be a value obtained by dividing the energy (J) of the pulsed light LP by the thickness DA (mm) of the base material 10. The energy of the pulsed light LP may refer to an integral value of the time waveform of the output (W) of the pulsed light LP. In this case, the irradiation device A preferably irradiates the laser light L so that the unit energy is 200 $\mu$J or more and 1500 $\mu$J or less, more preferably 300 $\mu$J or more and 1000 $\mu$J or less, and still more preferably 400 $\mu$J or more and 800 $\mu$J or less. The unit energy within this range makes it possible to appropriately form the modified portion H in the base material 10 and to inhibit cracks in the breaking surface while appropriately cutting the base material 10.

The unit energy can be calculated by measuring an average output value of the laser light L at each time with a power meter and dividing, by the thickness DA (mm) of the base material 10, the energy (integral value of the time waveform) of the pulsed light LP which is calculated based on the measured average output value and a pulse repetition frequency.

The irradiation device A preferably irradiates the laser light L having a wavelength at which the laser light L is transparent to the base material 10. That is, the wavelength of the laser light L is preferably within a wavelength range in which the laser light L is transparent to the base material 10. Herein, the term "transparent" refers to a state in which an attenuation factor $\Delta$I of light is 0.5 or less when the light is incident from the main surface 10A side of the base material 10 and is emitted from the main surface 10B side of the base material 10. The attenuation factor is expressed by the following equation (1), where an intensity of the incident light is intensity $I_{IN}$ and an intensity of the emitted light is intensity $I_{OUT}$.

$$\Delta I = (I_{IN} - I_{OUT})/I_{IN} \cdots (1)$$

The wavelength of the laser light L is preferably 250 nm or more and 3000 nm or less, more preferably 260 nm or more and 2500 nm or less, and still more preferably 350 nm or more and 1100 nm or less.

When the wavelength of the laser light L is within this range, the laser light L can be transmitted through the base material 10 to a certain extent to cause nonlinear absorption inside the base material 10, thereby appropriately forming the modified portion H.

The wavelength of the laser light L can be measured by a laser wavemeter.

The irradiation device A may irradiate the laser light L so that the laser light L has any spot diameter DL. For example, the spot diameter DL of the laser light L is preferably 1 $\mu$m or more and 30 $\mu$m or less, more preferably 2 $\mu$m or more and 20 $\mu$m or less, and still more preferably 3 $\mu$m or more and 10 $\mu$m or less. The spot diameter DL within this range makes it possible to form the modified portion H which is large enough to appropriately break the base material 10. As illustrated in FIG. 1, the spot diameter DL refers to a diameter of the laser light L at the most converged position (diameter at a focal position).

(Formation of Modified Portion)

FIG. 4 to FIG. 6 are schematic diagrams for explaining formation of a modified portion. In this production method, a plurality of modified portions H are formed at a predetermined interval along a scanning direction (moving direction) of the irradiation position by irradiating the base material 10 with the laser light L while scanning the irradiation position. Specifically, as illustrated in FIG. 4, in this production method, a virtual line T, which is a scanning trajectory of the irradiation position of the laser light L, is set on the main surface 10A of the base material 10. In this production method, the main surface 10A of the base material 10 is irradiated with the laser light L while scanning (moving) the irradiation position along the virtual line T, thereby forming a plurality of modified portions H arranged at predetermined intervals along the virtual line T. The virtual line T may be set to any shape. A length of the virtual line T may be any length, but is preferably, for example, 10 mm or more, more preferably 10 mm or more and 5000 mm or less, still more preferably 100 mm or more and 5000 mm or less, and particularly preferably 800 mm or more and 2000 mm or less.

In this production method, a diameter D of the modified portion H is preferably 0.2 $\mu$m or more and 20 $\mu$m or less, more preferably 0.5 $\mu$m or more and 10 $\mu$m or less, and still more preferably 1 $\mu$m or more and 5 $\mu$m or less. The diameter D of the modified portion H within this range makes it possible to appropriately break the base material 10 with the modified portions H as the starting points.

As illustrated in FIG. 4, a distance between centers of modified portions H adjacent along the virtual line T when viewed from the Z direction is defined as the pitch P. In this production method, the modified portions H are preferably formed such that the pitch P is 1 $\mu$m or more and 23 $\mu$m or less when viewed from the Z direction (direction perpendicular to the main surface 10A). The pitch P within this range makes it possible to appropriately form the modified portion H in the base material 10 and to inhibit cracks in the breaking surface while appropriately cutting the base material 10. The pitch P may refer to an average value of distances between centers of 10 sets of arbitrarily selected adjacent modified portions H.

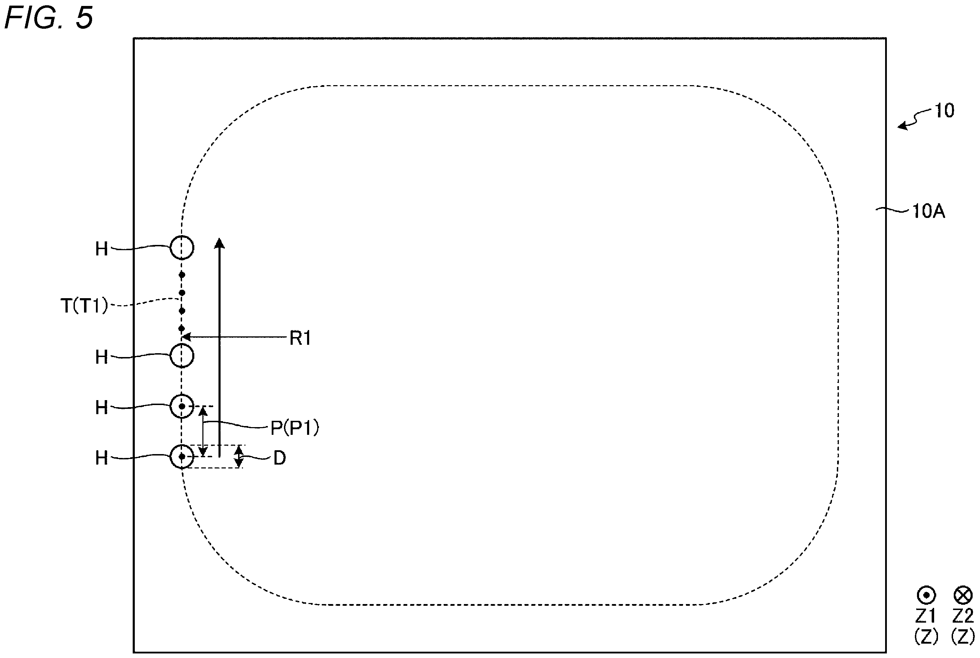

In this production method, the pitch P may vary for each shape of the virtual line T according to the shape of the virtual line T viewed from the Z direction. For example, as illustrated in FIG. 5, in a section T1 where the virtual line T is a straight line when viewed from the Z direction, the laser light L may be irradiated such that a pitch P1 of the modified portions H is 9 $\mu$m or less. In this production method, the pitch P1 of the modified portions H in the section T1 is preferably 1 $\mu$m or more and 8 $\mu$m or less, and more preferably more than 3 $\mu$m and 7 $\mu$m or less. The section T1 in which the virtual line is a straight line is not limited to a completely straight line, and a curvature radius R1 when viewed from the Z direction may be 100 mm or more, preferably 1000 mm or more, and more preferably 2500 mm or more.

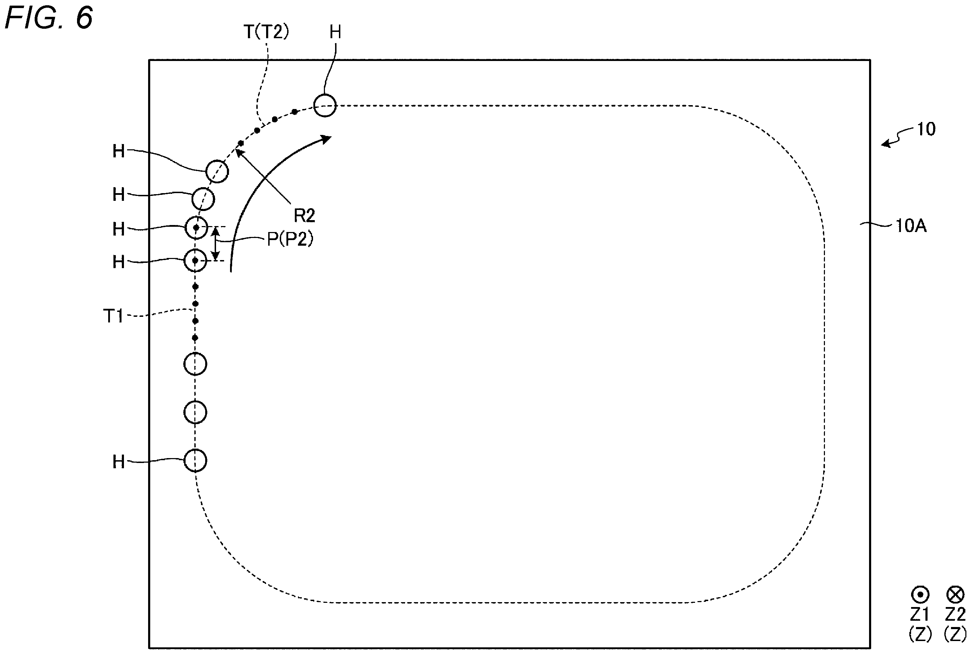

For example, as illustrated in FIG. 6, in a section T2 in which the virtual line T is a curved line when viewed from the Z direction, the laser light L may be irradiated such that a pitch P2 of the modified portions H is smaller than the pitch P1 in the section T1. In this production method, the pitch P2 of the modified portions H in the section T2 is preferably 5 $\mu$m or more and 7 $\mu$m or less, and more preferably 5 $\mu$m or more and 6 $\mu$m or less. The section T2 is preferably a section continuous with the section T1 (connected to the section T1). A curvature radius R2 of the section T2 when viewed from the Z direction may be less than 100 mm, and is preferably 2 mm or more and 10 mm or less, and more preferably 3 mm or more and 5 mm or less.

As illustrated in FIG. 1, in this production method, it is preferable to form the modified portions H over the entire thickness of the base material 10 (entire section in the Z direction). In other words, in this production method, it is preferable to irradiate the laser light L such that the modified portions H are formed from the main surface 10A to the main surface 10B of the base material 10. By forming the modified portions H from the main surface 10A to the main surface 10B, it is possible to appropriately cut the base material 10 with the modified portions H as the starting points.

(Breaking with Opening as Starting Point)

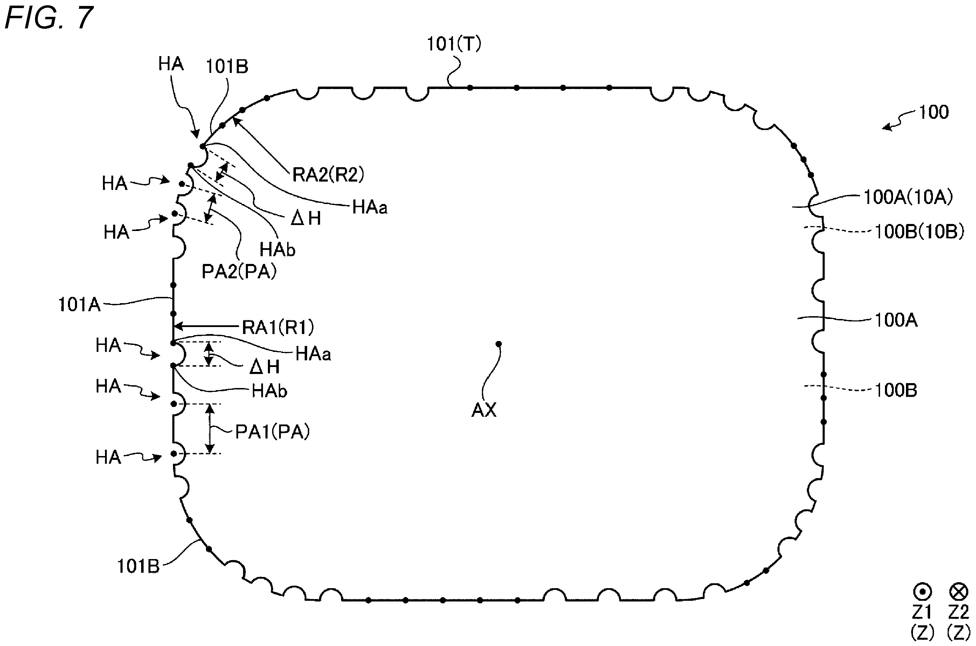

FIG. 7 is a schematic view of a glass article. After the plurality of modified portions H are formed along the virtual line T, in this production method, the glass article 100 is separated (cut out) from the base material 10 by breaking the base material 10 with the modified portions H as the starting points. Since the modified portions H are formed along the virtual line T, the base material 10 is broken along the virtual line T by breaking the base material 10 with the modified portions H as the starting points, and the glass article 100 is cut out as illustrated in FIG. 7. As will be described in detail later, the glass article 100 has an end surface 101 which is a breaking surface along the virtual line T, and a modified portion HA corresponding to the modified portion H remains on the end surface 101. In FIG. 6, for convenience of description, only a part of the modified portion HA on the end surface 101 (virtual line T) is illustrated, but the modified portion HA may be actually formed over the entire section in a circumferential direction of the end surface 101. The circumferential direction herein refers to a circumferential direction when a direction along a central axis AX is defined as an axial direction. The central axis AX refers to an axis extending in the Z direction through a central point of the glass article 100 when viewed from the Z direction.

In the present embodiment, the base material 10 may be broken with the modified portions H as the starting points by generating stress on the main surface 10A along the virtual line T. For example, the stress is generated on the main surface 10A along the virtual line T by irradiating the main surface 10A with $CO_2$ laser along the virtual line T, to break the base material 10 with the modified portions H as the starting points. However, the method for breaking the base material 10 with the modified portions H as the starting points is preferably, but not limited to, the irradiation of the $CO_2$ laser, and the base material 10 may be broken with the modified portions H as the starting points by generating stress on the main surface 10A along the virtual line T by applying a bending load along the virtual line T of the main surface 10A by a mechanical method. Here, the mechanical method refers to physically generating a bending load, and for example, the bending load may be generated by a machine, and the bending load may be generated manually by an operator.

In this production method, an edge portion (boundary portion between the end surface 101 and the main surface) of the end surface 101 of the glass article 100 cut out from the base material 10 may be polished to chamfer the end surface 101. Any method for polishing may be used, and for example, a grindstone may be used. The chamfered end surface 101 includes an edge surface 101S and a chamfered portion 101T as described later.

(Chemical Strengthening)

In this production method, the glass article 100 cut out from the base material 10 may be subjected to a chemical strengthening treatment to form a compressive stress layer on a surface of the glass article 100. The chemical strengthening treatment may be performed by any method, and is performed by, for example, immersing the glass article 100 in a molten salt containing alkali metals. A typical method includes immersing the glass article 100 in $KNO_3$

molten salt to perform an ion exchange treatment, followed by cooling to around room temperature. Treatment conditions such as a temperature of the $KNO_3$ molten salt and an immersion time may be set such that the surface compressive stress and the thickness of the compressive stress layer have desired values. The chemical strengthening method is not limited to those using a potassium salt such as the $KNO_3$ molten salt and may be any method. For example, the chemical strengthening may be performed by using a sodium salt. Further, the chemical strengthening treatment is preferably performed after cutting out the glass article 100 but is not limited thereto. The chemical strengthening treatment may be performed on the base material 10 before being cut out, and then the glass article 100 may be cut out from the base material 10 that has been subjected to the chemical strengthening treatment.

(Glass Article)

Hereinafter, characteristics of the glass article 100 will be described. The glass article 100 described below is produced by the production method described above, and as long as the glass article 100 has characteristics described below, the production method may be any method.

As illustrated in FIG. 7, the glass article 100 includes one main surface 100A and the other main surface 100B. That is, a region of the main surface 10A of the base material 10 cut out as the glass article 100 is the main surface 100A of the glass article 100, and a region of the main surface 10B of the base material 10 cut out as the glass article 100 is the main surface 100B of the glass article 100. The glass article 100 also includes the end surface 101 formed by being broken along the virtual line T.

The thickness of the glass article 100, that is, a distance from the main surface 100A to the main surface 100B in the Z direction may be the same as the thickness DA of the base material 10. In the example of FIG. 7, the glass article 100 has a flat sheet shape, but is not limited thereto, and may have the shape of a curved flat sheet. That is, the glass article 100 may have a curved surface shape in which the main surfaces 100A and/or 100B are convex in the Z direction. In the case where the main surfaces 100A and/or 100B of the glass article 100 are curved and convex in the Z direction, the curvature radius of the main surfaces 100A and/or 100B of the glass article 100 is preferably 10000 mm or less, more preferably 5000 mm or less, and still more preferably 3000 mm or less. In the case where the main surfaces 100A and/or 100B of the glass article 100 are curved and convex in the Z direction, the curvature radius of the main surfaces 100A and/or 100B of the glass article 100 is preferably 10 mm or more, more preferably 50 mm or more, still more preferably 100 mm or more, and particularly preferably 200 mm or more. That is, the curvature radius of the main surfaces 100A and/or 100B of the glass article 100 is preferably in the range of 10 mm to 10000 mm.

(End Surface)

The end surface 101 of the glass article 100 is a cross section formed by breaking the base material 10 along the virtual line T. Therefore, at least a part of the modified portion H formed in the base material 10 remains on the end surface 101 as the modified portion HA. The modified portion HA is a part of the modified portion H formed by the irradiation with the laser light L and can be said to be a linear damaged portion that is an irradiation mark (laser mark) of the laser light L. That is, the linear modified portion H extending in the Z direction (axial direction) is formed in the end surface 101. In the end surface 101, a plurality of modified portions HA are formed along the circumferential direction (that is, along the virtual line T) when the direction along the central axis AX is defined as the axial direction.

A portion of the glass article 100 in which any one of the density, refractive index, fictive temperature, or asymmetric electron density is different from that of a portion of the glass article 100 in which the modified portion HA is not formed may be set as the modified portion HA. The portion of the glass article 100 in which the modified portion HA is not formed may refer to, for example, a position separated from the end surface 101 by 10 mm or more when viewed from the Z direction.

A width ΔH of the modified portion HA when viewed from the Z direction is preferably 20 μm or less, more preferably 10 μm or less, and still more preferably 5 μm or less. The width ΔH refers to a distance from an end portion HAa to an end portion HAb of the modified portion HA on the main surface 100A. The end portion HAa is an end portion on one side of the modified portion HA in the circumferential direction (direction along the virtual line T) of the end surface 101, and the end portion HAb refers to an end portion on the other side of the modified portion HA.

The distance between the centers of the modified portions HA adjacent to each other in the circumferential direction (direction along the virtual line T) of the end surface 101 when viewed from the Z direction is defined as a pitch PA. When viewed from the Z direction, the pitch PA is preferably 1 μm or more and 23 μm or less. By setting the pitch PA in this range, the base material 10 is appropriately cut, and cracks are inhibited from occurring in the end surface 101. The pitch P may refer to an average value of distances between centers of 10 sets of arbitrarily selected adjacent modified portions HA.

The glass article 100 may have different pitches PA depending on the shape of a line (corresponding to the virtual line T) connecting the centers of the respective modified portions HA when viewed from the Z direction. For example, in a section 101A (corresponding to the section T1) in which the line connecting the centers of the modified portions HA is a straight line when viewed from the Z direction, a pitch PA1 of the modified portions HA may be 9 $\mu$m or less. The pitch PA1 of the modified portions HA in the section 101A is preferably 1 $\mu$m or more and 8 $\mu$m or less, and more preferably more than 3 $\mu$m and 7 $\mu$m or less. The section 101A which is the line connecting the centers of the modified portions HA is not limited to being completely linear. The curvature radius R1 of the line connecting the centers of the modified portions HA in the section 101A when viewed from the Z direction may be 100 mm or more, preferably 1000 mm or more, and more preferably 2500 mm or more. The line connecting the centers of the modified portions HA can also be said to be a line along the end surface 101.

For example, in a section 101B (corresponding to the section T2) in which the line connecting the centers of the modified portions HA is a curved line when viewed from the Z direction, a pitch PA2 of the modified portions HA may be smaller than the pitch PA1 in the section 101A. The pitch PA2 of the modified portions HA in the section 101B is preferably 5 $\mu$m or more and 7 $\mu$m or less, and more preferably 5 $\mu$m or more and 6 $\mu$m or less. The section 101B is preferably a section continuous with the section 101A (connected to the section 101A). The curvature radius R2 of the line connecting the centers of the modified portions HA in the section 101B when viewed in the Z direction may be less than 100 mm, preferably 2 mm or more and 10 mm or less, and more preferably 3 mm or more and 5 mm or less.

A surface roughness Sa of the end surface 101, as specified in ISO 25178, is 0.6 or less, preferably 0.3 or more and 0.6 or less, and more preferably 0.4 or more and 0.6 or less. When the surface roughness Sa is within this range, the cracks are inhibited from occurring in the end surface 101. In addition, the surface roughness Sa within this range makes it possible to reduce the probability of breakage when an impact or stress is applied to the glass article 100.

The surface roughness Sa can be measured with a laser microscope OLS5000 manufactured by Olympus Corporation. The surface roughness Sa can be obtained by, for example, measuring three or more points at the center in the thickness direction of the end surface 101 and calculating an average value thereof.

In this way, the glass article 100 has the modified portion HA formed in the end surface 101. However, the modified portion HA may be removed by polishing the end surface 101.

(Modified Portion)

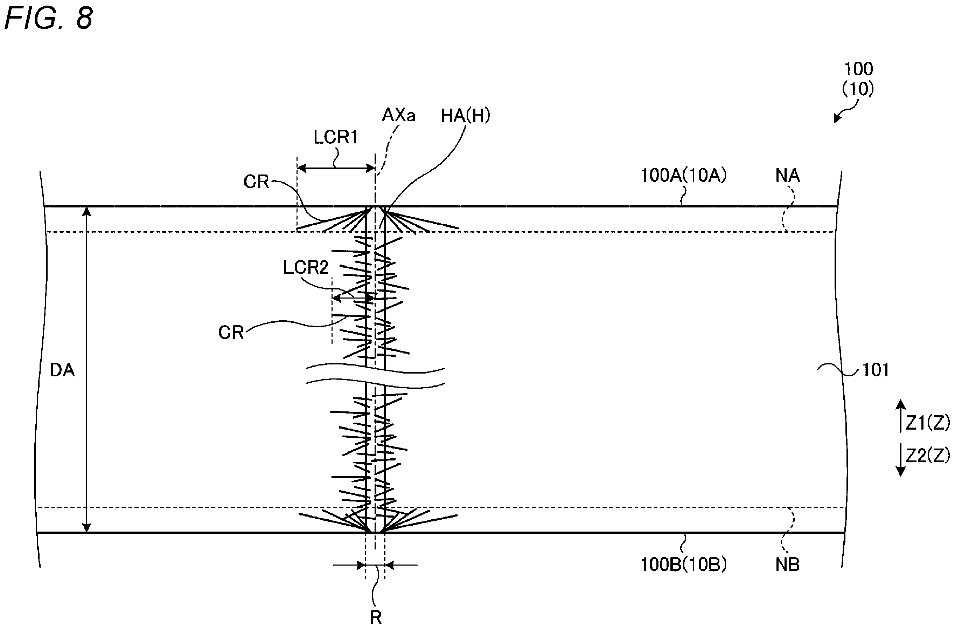

FIG. 8 is a schematic view illustrating an end surface of a glass article. As illustrated in FIG. 8, the modified portion HA is preferably formed over the entire thickness (entire section in the Z direction) of the glass article 100. In other words, the modified portion HA is preferably formed from the main surface 100A to the main surface 100B of the glass article 100. Since the modified portion HA is formed from the main surface 100A to the main surface 100B, the base material 10 is appropriately cut, and cracks are inhibited from occurring in the end surface 101.

In the glass article 100, a crack CR extending from the modified portion HA outward in a radial direction which is a direction orthogonal to the Z direction may be formed. Here, the radial direction refers to a radial direction when the central axis AXa of the modified portion HA is taken as the axial direction. The central axis AXa is an axis extending in the Z direction through a central point of the modified portion HA when viewed from the Z direction. A plurality of cracks CR may be formed around the modified portion HA. The crack CR may extend to the inside of the modified portion HA.

Here, a position on the end surface 101 separated from the main surface 10A in the direction Z2 by a distance of 10% of the thickness DA of the glass article 100 is defined as a first position NA. Similarly, a position separated from the main surface 10B in the direction Z1 by a distance of 10% of the thickness of the glass article 100 is defined as a second position NB. In a range from the main surface 100A to the first position NA and a range from the main surface 100B to the second position NB, a component orthogonal to the end surface 101 among lengths of the cracks CR in the radial direction is defined as a length LCR1. The length LCR1 refers to a distance in a direction orthogonal to the end surface 101 from the central axis HA of the modified portion to an end of the crack CR on the side (radially outer side) opposite to the modified portion HA. The length LCR1 can also be said to be a length of the crack CR in a direction parallel to the main surface of the glass article 100 and orthogonal to the virtual line T. In this case, the length LCR1 is preferably 12 $\mu$m or less. As a value of the length LCR1, it is preferable to use an average value of the lengths LCR1 of the cracks CR in three modified portions HA arbitrarily selected from the end surface 101. When the length LCR1 is within this range, the cracks are inhibited from occurring in the end surface 101. The length LCR1 of the crack CR may be determined by observing the main surface 10A with a digital microscope (for example, VHX-6000 manufactured by Keyence Corporation) and measuring a distance between a line K connecting the centers of the modified portions HA and the end potion opposite to the modified portions HA as the length LCR1.

The length of the crack CR in the region from the first position NA to the second position NB of the end surface 101 in the direction orthogonal to the end surface 101 is defined as a length LCR2. The length LCR2 can also be said to be a length of the crack CR in the direction parallel to the main surface of the glass article 100 and orthogonal to the virtual line T. In this case, the length LCR2 of the crack CR is preferably 7 $\mu$m or less. As the length LCR2 of the crack CR in the region from the first position NA to the second position NB, it is preferable to use an average value of lengths LCR2 of three cracks CR arbitrarily selected from the region from the first position NA to the second position NB. When the length LCR2 is within this range, the cracks are inhibited from occurring in the end surface 101.

Generally, the length LCR1 is larger than the length LCR2. In the vicinity of a substrate surface, a minute amount of plume is generated outside a substrate at the time of laser irradiation, and a shock wave is generated inside the substrate as a reaction force against momentum of the plume. Hence, when the laser irradiation is performed in a state in which the crack CR is formed by the laser irradiation, the crack CR extends due to the stress of the shock wave. Since the shock propagates radially into the substrate in a spherical shape, centered on an intersection of an optical axis center and the substrate surface, the substrate surface as a generation source receives the strongest shock. Hence, the length LCR1 of the crack CR in the vicinity of the surface is larger than the length LCR2 of the crack inside the substrate.

In the case of the burst pulse, the number of pulses is large, the number of times the crack CR is extended by the shock wave is large, and thus the length LCR1 becomes long. Conversely, in the case of the single pulse described in the present application, the number of times of the shock wave is inhibited to the minimum, and thus the length LCR1 is reduced, and a high-quality cut surface is obtained.

It can be said that the crack CR in the region from the first position NA to the second position NB is not exposed to the end surface 101 and is a latent scratch inside the end surface 101. The crack CR in the region from the first position NA to the second position NB can be measured by, for example, the following method.

First, an evaluation region (region where the length LCR2 of the crack CR is measured) of the end surface 101 of the glass article 100 is polished by a predetermined amount, and then washed and dried, and a work-affected layer that has become a circular pit or an elliptical pit by etching is observed with an optical microscope.

Here, the "work-affected layer" refers to a layer in which scratches, cracks, and the like generated in the glass sheet in a processing process such as chamfering and grinding exist.

As the optical microscope, a laser microscope LEXT OLS5000 manufactured by Olympus Corporation having an objective lens of 50 times magnification may be used, and observation may be performed in an observation field of view of 258 $\mu$m $\times$ 258 $\mu$m.

This process (confirmation of latent scratches by polishing and etching) is repeated a plurality of times, and the thickness of the glass article 100 removed by polishing and etching at the time when the circular pit or the elliptical pit at the same position is not observed on the evaluation region is defined as the length LCR2 of the crack CR at the position. That is, a maximum value of the distance in the direction orthogonal to the end surface 101 of the crack CR in the evaluation region is measured as LCR2.

The "etching" may be performed at room temperature (25°C) by immersing the entire glass sheet in an etchant. As the etchant, an aqueous solution containing 5 mass% of hydrofluoric acid (HF) and 95 mass% of pure water may be used.

Although the crack CR formed in the glass article 100 cut out from the base material 10 has been described above, the crack CR may be similarly formed in the base material 10 in which the modified portion H is formed by irradiation with the laser light L. In this case, since the base material 10 is not broken and the end surface 101 is not formed, the crack CR can be confirmed when viewed from the main surface 10A. In this case, the length LCR1 of the crack CR in main surface 10A is preferably 12 $\mu$m or less. The length LCR1 of the crack CR in the main surface 10A may be an average value of lengths LCR1 of three cracks CR arbitrarily selected from the main surface 10A.

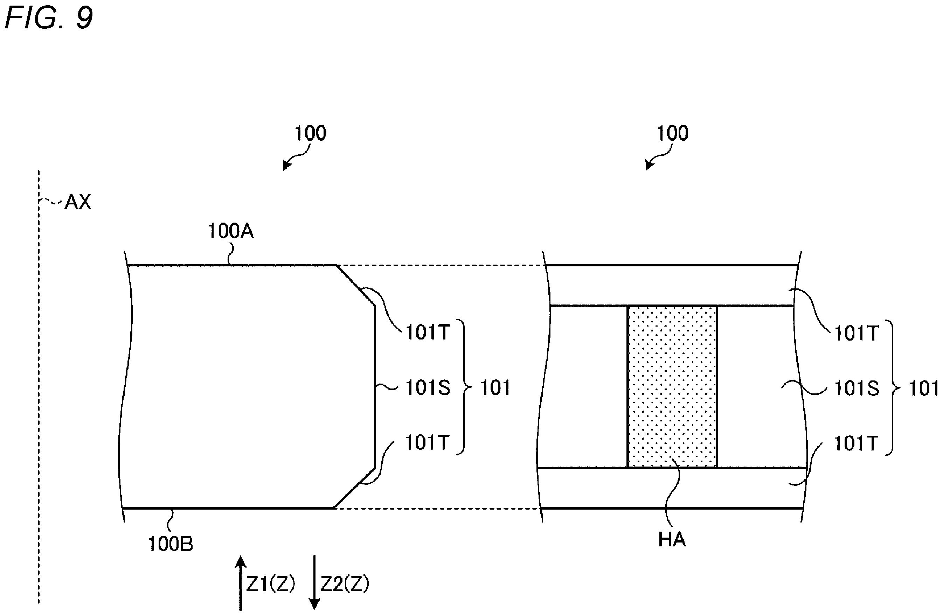

FIG. 9 is a schematic view illustrating an example of a chamfered end surface. As described above, the end surface 101 may be chamfered. In this case, as illustrated in FIG. 9, the end surface 101 includes the edge surface 101S and the chamfered portion 101T. The edge surface 101S is a surface of the end surface 101 that is not chamfered. The chamfered portion 101T is a surface of the end surface 101 that is chamfered. As illustrated in the left picture of FIG. 9, the chamfered portion 101T may be formed at a position between the main surface 100A and the edge surface 101S and a position between the main surface 100B and the edge surface 101S in the Z direction. As illustrated in the left picture of FIG. 9, the chamfered portion 101T is inclined radially inward of the glass article 100 as the chamfered portion 101T moves away from the main surface 100B in the Z direction. In the example of FIG. 9, the chamfered portion 101T is flat and has a chamfered corner, but the chamfered portion 101T is not limited to a chamfered corner and may be a rounded corner. In this case, the chamfered portion 101T has a curved shape.

In the case where the end surface 101 is chamfered as described above, as illustrated in the right picture of FIG. 9, the modified portion H is formed in the edge surface 101S (modified portion H remains). On the other hand, since the modified portion H is removed by chamfering, the modified portion H is not formed in the chamfered portion 101T (modified portion H does not remain).

(Material of Glass Article)

The glass article 100 is a transparent sheet-shaped member. The material of the glass article 100 is glass. The glass article 100 may be an amorphous glass or a glass ceramic containing crystals on a surface or inside thereof. As the glass article 100, for example, an alkali-free glass, a soda lime glass, a soda lime silicate glass, an aluminosilicate glass, a borosilicate glass, a lithium aluminosilicate glass, and a borosilicate glass can be used. The material of the glass article 100 is preferably alkali glass in order to appropriately perform chemical strengthening. More specifically, the glass article 100 is preferably aluminosilicate glass or lithium aluminosilicate glass to which a large stress is easily introduced by a strengthening treatment even in the case where the thickness is thin and by which a high-strength glass can be obtained even in the case where the thickness is thin. A glass for chemical strengthening, which is based on an aluminosilicate glass, (for example, "Dragontrail (registered trademark)" manufactured by AGC Inc.) is also suitably used.

As the base material 10, either glass before chemical strengthening or glass after chemical strengthening may be used, but the glass before chemical strengthening is preferably used. More preferably, the glass before chemical strengthening is used as the base material 10 since a compressive stress layer is also formed on a cut surface by carrying out the chemical strengthening after cutting the base material 10. In the case where the glass before chemical strengthening is cut with the laser, cracks between irradiation pitches are less likely to develop than in the glass after chemical strengthening. However, according to the cutting method of the present embodiment, even the glass before chemical strengthening can be appropriately cut.

(Composition of Glass)

The glass article 100 may contain, in terms of mol% based on oxides, 50% to 80% of $SiO_2$, 1% to 20% of $Al_2O_3$, and 6% to 20% of $Na_2O$. Further, the glass article 100 may contain, in terms of mol% based on oxides, 50% to 80% of $SiO_2$, 0.1% to 25% of $Al_2O_3$, 3% to 30% of $Li_2O+Na_2O+K_2O$, 0% to 25% of MgO, 0% to 25% of CaO, and 0% to 5% of $ZrO_2$. Further, the glass article 100 may contain, in terms of mol% based on oxides, 50% to 80% of $SiO_2$, 1% to 20% of $Al_2O_3$, 6% to 20% of $Na_2O$, 0% to 11% of $K_2O$, 0% to 15% of MgO, 0% to 6% of CaO, and 0% to 5% of $ZrO_2$. A numerical range represented by using "to" means a range including numerical values described before and after "to" as a lower limit value and an upper limit value. For example, 50% to 80% herein refers to 50% or more and 80% or less when mol% of a total amount of the glass article 100 is 100%, and the same applies to other numerical ranges. Further, for example, "$Li_2O+Na_2O+K_2O$" indicates the total content of $Li_2O$, $Na_2O$, and $K_2O$, and the same applies to the other cases where "+" is used.

More specifically, a more preferable composition of the glass article 100 includes the following glass compositions. For example, "containing 0% to 25% of MgO" means that MgO is not essential but may be contained up to 25%. The glass of (i) is categorized in soda-lime silicate glass, the glasses of (ii) and (iii) are categorized in aluminosilicate glass, and the glasses of (iv), (v), and (vi) are categorized in lithium aluminosilicate glass.

(i) Glass having a composition containing, in terms of mol%, 63% to 73% of $SiO_2$, 0.1% to 5.2% of $Al_2O_3$, 10% to 16% of $Na_2O$, 0% to 1.5% of $K_2O$, 0% to 5% of $Li_2O$, 5% to 13% of MgO, and 4% to 10% of CaO.
(ii) Glass having a composition containing, in terms of mol%, 50% to 74% of $SiO_2$, 1% to 10% of $Al_2O_3$, 6% to 14% of $Na_2O$, 3% to 11% of $K_2O$, 0% to 5% of $Li_2O$, 2% to 15% of MgO, 0% to 6% of CaO, and 0% to 5% of $ZrO_2$, in which the total content of $SiO_2$ and $Al_2O_3$ is 75% or less, the total content of $Na_2O$ and $K_2O$ is 12% to 25%, and the total content of MgO and CaO is 7% to 15%.
(iii) Glass having a composition containing, in terms of mol%, 68% to 80% of $SiO_2$, 4% to 10% of $Al_2O_3$, 5% to 15% of $Na_2O$, 0% to 1% of $K_2O$, 0% to 5% of $Li_2O$, 4% to 15% of MgO, and 0% to 1% of $ZrO_2$.
(iv) Glass having a composition containing, in terms of mol%, 67% to 75% of $SiO_2$, 0% to 4% of $Al_2O_3$, 7% to 15% of $Na_2O$, 1% to 9% of $K_2O$, 0% to 5% of $Li_2O$, 6% to 14% of MgO, and 0% to 1.5% of $ZrO_2$, in which the total content of $SiO_2$ and $Al_2O_3$ is 71% to 75%, the total content of $Na_2O$ and $K_2O$ is 12% to 20%, and the content of CaO is less than 1% in the case where CaO is contained.
(v) Glass having a composition containing, in terms of mol%, 56% to 73% of $SiO_2$, 10% to 24% of $Al_2O_3$, 0% to 6% of $B_2O_3$, 0% to 6% of $P_2O_5$, 2% to 7% of $Li_2O$, 3% to 11% of $Na_2O$, 0% to 5% of $K_2O$, 0% to 8% of MgO, 0% to 2% of CaO, 0% to 5% of SrO, 0% to 5% of BaO, 0% to 5% of ZnO, 0% to 2% of $TiO_2$, and 0% to 4% of $ZrO_2$.
(vi) Glass having a composition containing, in terms of mol%, 58% to 80% of $SiO_2$, 13% to 18% of $Al_2O_3$, 0% to 5% of $B_2O_3$, 0.5% to 4% of $P_2O_5$, 3% to 10% of $Li_2O$, 5% to 20% of $Na_2O$, 0% to 2% of $K_2O$, 0% to 11% of MgO, 0% to 20% of CaO, 0% to 20% of SrO, 0% to 15% of BaO, 0% to 10% of ZnO, 0% to 1% of $TiO_2$, and 0% to 2% of $ZrO_2$.

(Compressive Stress Layer)

The glass article 100 includes a compressive stress layer in the case where the chemical strengthening treatment is performed. The compressive stress layer is formed on an entire surface of the glass article 100, that is, on the main surface 100A, the main surface 100B, and the end surface 101, in this case. In the glass article 100, the compressive stress layer is not limited to being formed on all of the main surface 100A, the main surface 100B, and the end surface 101, and the compressive stress layer may be formed on at least one of the main surface 100A, the main surface 100B, and the end surface 101 (preferably, at least the main surface 100A).

The compressive stress layer is a layer on which compressive stress acts in the glass article 100. Compressive stress S acts on the surface of the glass article 100, and the compressive stress decreases toward a center in the thickness direction of the glass article. For example, it can be said that the compressive stress layer is a portion of the entire glass article 100 at a depth from the surface until the stress becomes 0. In the glass article 100, tensile stress acts on a layer deeper than the depth at which the stress becomes 0. Hereinafter, the compressive stress acting on the surface of the glass article 100, that is, a surface of the compressive stress layer is referred to as surface compressive stress CS.

In the glass article 100, the surface compressive stress CS is preferably 500 MPa or more and 1200 MPa or less, more preferably 650 MPa or more, and still more preferably 750 MPa or more. In the case where the surface compressive stress CS falls within this range, a decrease in impact resistance can be appropriately prevented. The surface compressive stress CS may be measured by any method, and may be measured, for example, by measuring a strain in the glass article 100 by using a photoelasticity analysis method. In the present embodiment, the surface compressive stress CS may be measured by using, for example, FSM-6000LE which is a surface stress meter manufactured by Orihara Industrial Co., LTD.

In the glass article 100, a depth DOL of the compressive stress layer is preferably 10 $\mu$m or more and 100 $\mu$m or less, more preferably 15 $\mu$m or more, still more preferably 25 $\mu$m or more, and further preferably 30 $\mu$m or more. The depth DOL refers to a thickness of the compressive stress layer in the glass article 100. That is, the depth DOL refers to a distance in the thickness direction from the surface of the glass article 100 on which the surface compressive stress CS acts to the depth at which a value of the compressive stress becomes 0. In the glass article 100, in the case where the depth DOL falls within this range, a decrease in impact resistance can be appropriately prevented. The depth DOL may be measured by any method, and may be measured, for example, by measuring a strain in the glass article 100 by using a photoelasticity analysis method. In the present embodiment, the depth DOL may be measured by using, for example, FSM-6000LE which is a surface stress meter manufactured by Orihara Industrial Co., LTD.

(Application of Glass Article)

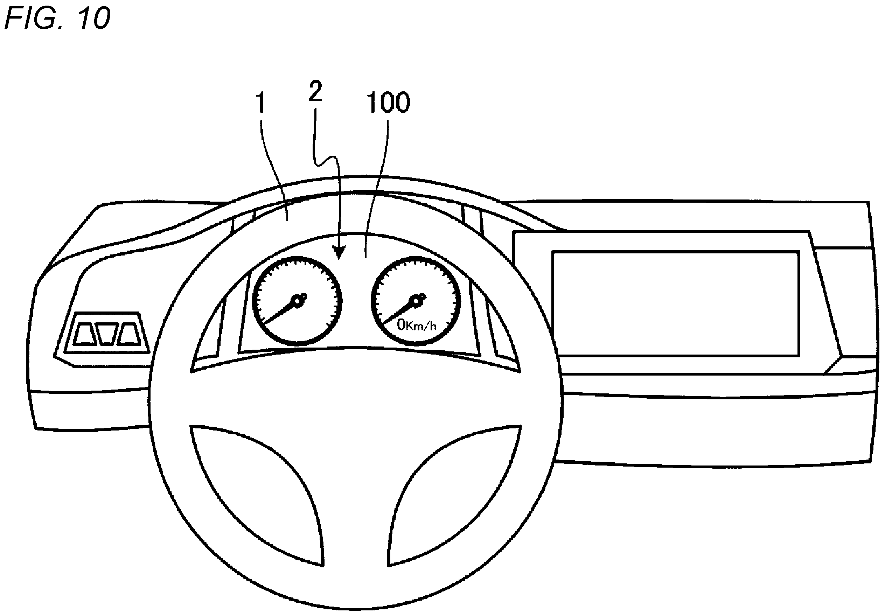

FIG. 10 is a schematic diagram illustrating an on-vehicle display according to the present embodiment. As illustrated in FIG. 10, the glass article 100 according to the present embodiment is provided in an on-vehicle display 2, and is used as a cover member on a surface of the on-vehicle display. The on-vehicle display 2 is a display device provided in a vehicle and is provided, for example, on a front side of a steering shaft 1 in the vehicle. The on-vehicle display 2 displays, for example, a start button, various meters such as a car navigation screen and a speedometer, and the like. However, the configuration in FIG. 10 is an example, and the on-vehicle display 2 to which the glass article 100 is applied may have any configuration. In addition, the glass article 100 is not limited to being used as a cover member for the surface of the on-vehicle display, and may be used for any application.

(Effects)

As described above, the method for producing the glass article 100 according to the present embodiment includes: irradiating pulse-oscillated laser light L along the virtual line T set on the main surface 10A of the base material 10 to form a plurality of modified portions H along the virtual line T in the base material 10; and breaking the base material 10 with the modified portions H along the virtual line T as starting points to cut out the glass article 100 from the base material 10. In forming the modified portions H, the laser light is irradiated which is pulse-oscillated in a mode other than the burst mode and has a pulse width (width LB) of 15 ps or more and 100 ps or less.

Here, in the case of using the burst mode, since the regions irradiated with the small pulsed light overlap, the irradiated portions are exposed to a large number of shock waves, and the cracks may occur in the breaking surface cut out with the modified portions as starting points.

In contrast, according to this production method, since the laser light L is irradiated in the non-burst mode, it is possible to inhibit the irradiated portions from being exposed to a large number of shock waves, and to inhibit the occurrence of cracks in the breaking surface. Further, in the case of the non-burst mode, the number of pulses irradiated at one irradiation portion is smaller than that in the case of the burst mode, and thus the amount of energy applied to the base material 10 is reduced, and the base material may not be appropriately modified. However, according to this production method, by setting the width LB to 15 ps or more and 100 ps or less, the amount of energy applied to the base material 10 can be sufficiently secured, the base material can be appropriately modified, and the base material can be appropriately broken. More specifically, according to this production method, by using the non-burst mode while setting the pulse width LB within the above range, the stress required for breaking can be reduced, the base material 10 can be appropriately broken, the surface roughness of the end surface 101 (breaking surface) of the glass article 100 at the time of breaking can be improved, and the occurrence of cracks in the end surface 101 can be inhibited.

The glass article 100 according to the present embodiment includes the main surface 100A and the end surface 101, in which a plurality of linear modified portions HA extending in the thickness direction (Z direction) of the glass article 100 are formed in the end surface 101, and the surface roughness Sa of the end surface 101, as specified in ISO 25178, is 0.6 or less. The glass article 100 according to the present embodiment is appropriately cut, and the cracks are inhibited from occurring in the end surface 101 (breaking surface).

The present disclosure describes the following invention. Note that the present invention is not limited thereto.

(1) A method for producing a glass article, the method including:

irradiating pulse-oscillated laser light along a virtual line set on a main surface of a base material to form a plurality of modified portions along the virtual line in the base material; and

breaking the base material with the modified portions along the virtual line as starting points to cut out a portion from the base material and obtain a glass article, in which

a minimum pulse interval of the laser light is more than 1 $\mu$s, and a pulse width of the laser light is 15 ps or more and 100 ps or less.

(2) The method for producing a glass article according to (1), in which a pitch P and a pulse width LB have the following relationship:

$$P \leq 0.25 \times LB + 3.5,$$

provided that P is a numerical value expressed in unit of $\mu$m, and LB is a numerical value expressed in unit of ps.

(3) The method for producing a glass article according to (1) or (2), in which the pulse width of the laser light is 15 ps or more and 60 ps or less.

(4) The method for producing a glass article according to any one of (1) to (3), in which the laser light has a wavelength at which the laser light is transparent to the base material.

(5) The method for producing a glass article according to any one of (1) to (4), in which a pitch of the plurality of modified portions is 1 $\mu$m or more and 23 $\mu$m or less when viewed from a direction perpendicular to the main surface of the base material.

(6) The method for producing a glass article according to any one of (1) to (5), in which energy of one pulse of the laser light is 200 $\mu$J or more and 1500 $\mu$J or less per 1 mm thickness of the base material.

(7) The method for producing a glass article according to any one of (1) to (6), in which when viewed from a direction perpendicular to the main surface of the base material, a pitch of the plurality of modified portions in a section where the virtual line is a curved line is smaller than a pitch of the plurality of modified portions in a section where the virtual line is a straight line.

(8) The method for producing a glass article according to any one of (1) to (7), in which the modified portions are formed from the main surface of the base material to an opposite main surface.

(9) The method for producing a glass article according to any one of (1) to (8), in which when a position which is separated from a first main surface on one side toward a second main surface on an opposite side by a distance of 10% of a thickness of the glass article is defined as a first position,

a length of a crack extending from a modified portion in a region from the first main surface to the first position is 12 $\mu$m or less, the length is in a direction parallel to the main surface of the glass article and orthogonal to the virtual line.

(10) The method for producing a glass article according to any one of (1) to (9), in which the base material has a thickness of 0.7 mm or more.

(11) The method for producing a glass article according to any one of (1) to (10), in which the base material has a fracture toughness value $K_{IC}$ of 0.6 (MPa·m$^{0.5}$) or more.

(12) The method for producing a glass article according to any one of (1) to (11), in which a thickness of the base material is less than 3 mm, and each of the plurality of modified portions is formed by one time pulse irradiation.

(13) The method for producing a glass article according to any one of (1) to (12), in which an optical system for irradiating the laser light is an aberration optical system.

(14) A glass article having a main surface and an end surface, in which

a plurality of linear modified portions extending in a thickness direction of the glass article are formed in the end surface, and a surface roughness Sa of the end surface, as specified in ISO 25178, is 0.6 $\mu$m or less.

(15) The glass article according to (14), in which when a position, which is separated from a first main surface on one side toward a second main surface on an opposite side by a distance of 10% of a thickness of the glass article, is defined as a first position,

a length of a crack extending from a modified portion in a region from the first main surface to the first position is 12 $\mu$m or less, the length is in a direction orthogonal to the end surface.

(16) The glass article according to (14) or (15), in which when a position on the end surface which is separated from the first main surface on one side toward the second main surface on the opposite side by a distance of 10% of the thickness of the glass article is defined as a first position, and a position on the end surface which is separated from the second main surface toward the first main surface side by a distance of 10% of the thickness of the glass article is defined as a second position,

a length of a crack extending from a modified portion in a region from the first position to the second position of the end surface is 7 $\mu$m or less, the length is in the direction orthogonal to the end surface.

(17) The glass article according to any one of (14) to (16), in which a pitch of the modified portions is 1 $\mu$m or more and 23 $\mu$m or less when viewed from a direction perpendicular to the main surface.

(18) The glass article according to any one of (14) to (17), in which when viewed from a direction perpendicular to the main surface, a pitch of the modified portions in a section where a line along the end surface is a curved line is smaller than a pitch of the modified portions in a section where the line along the end surface is a straight line.

(19) The glass article according to any one of (14) to (18), having a thickness of 0.7 mm or more.

(20) The glass article according to any one of (14) to (19), having a fracture toughness value $K_{IC}$ of 0.6 (MPa·m$^{0.5}$) or more.

Examples

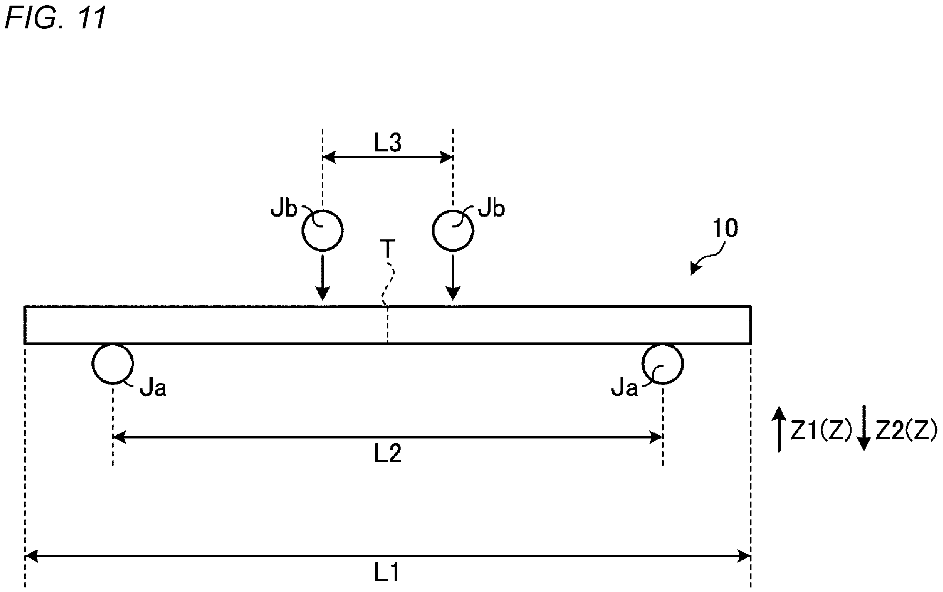

Next, Examples will be described. FIG. 11 is a schematic view illustrating cutting out of a base material in Examples. In Examples, a base material having a length of 50 mm, a width of 50 mm (width L1 in FIG. 11), and a thickness of 1.3 mm was prepared. As for the base material, Dragontrail (registered trademark) manufactured by AGC was used. The base material was not chemically strengthened. A virtual line extending linearly in a longitudinal direction from a center position of the base material in a lateral direction (width direction) was set so that a glass article cut out from the base material had a longitudinal length of 50 mm and a lateral width of 25 mm, and pulsed laser light was irradiated along the virtual line. The irradiation conditions of the laser light are shown below.

Irradiation conditions:

Wavelength: 1064 nm
Output: 6W to 10W
Collimator diameter: 8 mm
Feed speed: 10 mm/s to 230 mm/s
Oscillation frequency: 10000 Hz

As illustrated in FIG. 11, the main surface of the base material irradiated with the laser light on the side on which the laser light was incident was supported by a pair of cylindrical jigs Ja, and a pair of cylindrical jigs Jb were lowered toward the main surface on the side from which the laser light was emitted at a lowering speed of 1 mm/min to bring the jigs Jb into contact with the main surface on the upper side, thereby applying stress to the base material and cutting the base material along the virtual line T. The jigs Ja were arranged on both sides in the width direction across the virtual line T, and an interval L2 between the pair of jigs Ja was 30 mm. The jigs Jb were arranged on both sides in the width direction across the virtual line T, and an interval L3 between the pair of jigs Jb was 10 mm.

(Experiment 1)

Table 1 shows evaluation results of respective examples in Experiment 1. As shown in Table 1, in Example 1, the irradiation conditions of the laser light were as follows: an optical system 1 (Smart Cleave Classic Torch (hereinafter abbreviated as CL) manufactured by Coherent Corp.) was used, the laser light was irradiated in a burst mode, and a pulse width (width LB in the present embodiment) was 10 ps. In Example 1, the number of pulsed lights in one pulse group was 4, an interval between the pulsed lights in one pulse group was 13 ns, and an irradiation period of the pulse group was 37.5 kHz.

In Example 2, the irradiation conditions of the laser light were as follows: an optical system 2 was used, the laser light was irradiated in a non-burst mode, the pulse width (width LB in the present embodiment) was 20 ps, the interval between the pulsed light was 100 $\mu$s, and a pitch between modified portions (pitch P in the present embodiment) was 3 $\mu$m. Other conditions are as described above. The conditions of Examples 3 to 6 are the same as those of Example 2 except for the conditions shown in Table 1. The optical system 2 refers to the Smart Cleave High Efficiency Torch (hereinafter, abbreviated as HE) manufactured by Coherent Corp.

Table 1

| | Conditions | | | Evaluation | |
|---|---|---|---|---|---|
| | Optical system | Pulse mode | Pulse width (ps) | Sa ($\mu$m) | Maximum crack depth ($\mu$m) |
| Ex. 1 | Optical system 1 | Burst | 10 | 0.636 | 7.165 |
| Ex. 2 | Optical system 2 | Non-burst | 20 | 0.567 | 5.735 |
| Ex. 3 | Optical system 2 | Non-burst | 32.5 | 0.474 | |
| Ex. 4 | Optical system 2 | Non-burst | 40 | 0.499 | |
| Ex. 5 | Optical system 2 | Non-burst | 50 | 0.575 | |
| Ex. 6 | Optical system 2 | Non-burst | 68.5 | 0.612 | |

As shown in Table 1, for the glass article obtained by breaking the base material under the conditions of Examples 1 to 6, the surface roughness Sa of the end surface (breaking surface) and a maximum crack depth (LCR2) from the first position NA to the second position NB of the end surface were measured.

The surface roughness Sa was measured with a laser microscope OLS5000 manufactured by Olympus Corporation. An average value of three or more points at the center in the thickness direction was calculated.

In the measurement of the maximum crack depth LCR2, the end surface (breaking surface) of the glass article 100 in each example was polished and etched as described above, the end surface 101 was observed from a direction perpendicular to the main surface with a digital microscope (VHX-6000 manufactured by Keyence Corporation) to visually recognize the presence or absence of a pit, and the removed thickness at the time when the pit was not confirmed was defined as the maximum crack depth.

In the evaluation in Experiment 1, a case where the surface roughness Sa was 0.630 or less was determined to be acceptable, and a case where the surface roughness Sa was not 0.630 or less was determined to be unacceptable. As shown in Table 1, it can be seen that Example 1 using the burst mode, which is a comparative example, is unacceptable and the surface roughness of the breaking surface cannot be reduced. On the other hand, it can be seen that Examples 2 to 6 using the non-burst mode, which are working examples, are acceptable and the surface roughness of the breaking surface can be reduced. For example, as shown in Examples 1 and 2, it can be seen that the non-burst mode makes it possible to reduce the maximum crack depth.

(Experiment 2)

Table 2 shows evaluation results of respective examples in Experiment 2. In Experiment 2, in the non-burst mode, glass articles were produced under different pulse width and pitch conditions. The conditions in each example are shown in Table 2. The unit energy in Table 2 refers to the unit energy (value obtained by dividing the energy ($\mu$J) of the pulsed light by the thickness (mm) of the base material 10) described in the present embodiment.

Table 2

| | Conditions | | | | | | Evaluation |
|---|---|---|---|---|---|---|---|
| | Optical system | Pulse mode | Pulse width (ps) | Pitch ($\mu$m) | Pulse energy ($\mu$J) | Unit energy ($\mu$J/mm) | Breaking stress (MPa) |
| Ex. 7 | Optical system 2 | Non-burst | 10 | 3 | 829 | 638 | (Breaking not possible) |
| Ex. 8 | Optical system 2 | Non-burst | 20 | 3 | 829 | 638 | 13.24 |
| Ex. 9 | Optical system 2 | Non-burst | 25 | 3 | 829 | 638 | 15.15 |
| Ex. 10 | Optical system 2 | Non-burst | 32.5 | 1 | 584 | 449 | 24.29 |
| Ex. 11 | Optical system 2 | Non-burst | 32.5 | 2 | 584 | 449 | 22.52 |
| Ex. 12 | Optical system 2 | Non-burst | 32.5 | 3 | 584 | 449 | 20.94 |
| Ex. 13 | Optical system 2 | Non-burst | 32.5 | 5 | 584 | 449 | 13.26 |
| Ex. 14 | Optical system 2 | Non-burst | 32.5 | 7 | 584 | 449 | 11.78 |
| Ex. 15 | Optical system 2 | Non-burst | 40 | 1 | 584 | 449 | 19.54 |

(continued)

| | | Conditions | | | | | Evaluation |
|---|---|---|---|---|---|---|---|
| | Optical system | Pulse mode | Pulse width (ps) | Pitch (μm) | Pulse energy (μJ) | Unit energy (μJ/mm) | Breaking stress (MPa) |
| Ex. 16 | Optical system 2 | Non-burst | 40 | 2 | 584 | 449 | 24.29 |
| Ex. 17 | Optical system 2 | Non-burst | 40 | 3 | 584 | 449 | 15.92 |
| Ex. 18 | Optical system 2 | Non-burst | 40 | 5 | 584 | 449 | 22.52 |
| Ex. 19 | Optical system 2 | Non-burst | 40 | 7 | 584 | 449 | 13.26 |
| Ex. 20 | Optical system 2 | Non-burst | 50 | 1 | 584 | 449 | 11.78 |
| Ex. 21 | Optical system 2 | Non-burst | 50 | 2 | 584 | 449 | 19.54 |
| Ex. 22 | Optical system 2 | Non-burst | 50 | 3 | 584 | 449 | 16.12 |
| Ex. 23 | Optical system 2 | Non-burst | 50 | 5 | 584 | 449 | 24.29 |
| Ex. 24 | Optical system 2 | Non-burst | 50 | 7 | 584 | 449 | 22.52 |
| Ex. 25 | Optical system 2 | Non-burst | 68.5 | 1 | 584 | 449 | 22.33 |
| Ex. 26 | Optical system 2 | Non-burst | 68.5 | 2 | 584 | 449 | 17.42 |
| Ex. 27 | Optical system 2 | Non-burst | 68.5 | 3 | 584 | 449 | 17.12 |
| Ex. 28 | Optical system 2 | Non-burst | 68.5 | 5 | 584 | 449 | 23.04 |

In Experiment 2, a value of the maximum stress acting on the base material irradiated with the laser light under the conditions of each example when the base material was broken using the jigs Ja and Jb was measured as the breaking stress. More specifically, 20 samples of glass articles were produced under the conditions of each example, and an average value of the maximum stress acting on each sample was defined as the breaking stress. The results are shown in Table 2. The value of the maximum stress was measured using a table-top precision universal tester "Autograph AGS-X 10kN" manufactured by Shimadzu Corporation.

As shown in Table 2, in Examples 8 to 28 in which the pulse width was 15 ps or more and 100 ps or less, it can be seen that the base material can be appropriately broken. On the other hand, in Example 7 as a comparative example in which the pulse width was 10 ps, it can be seen that the base material cannot be appropriately broken since the modified portion cannot be appropriately formed and the base material cannot be broken under the current conditions.

(Experiment 3)

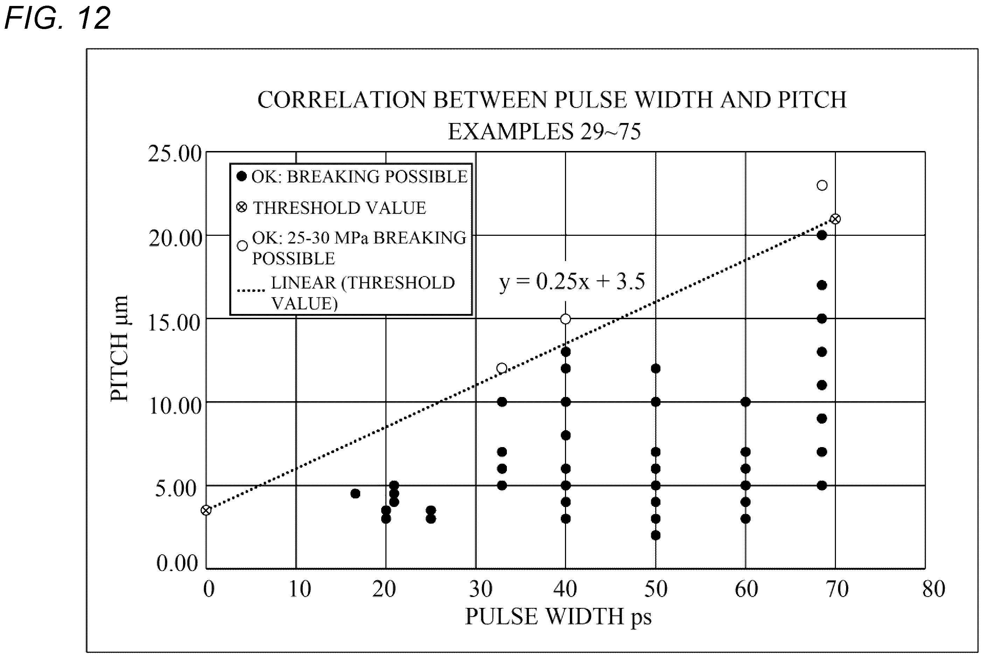

Next, a correlation between the pitch P and the pulse width LB was examined. Tables 3 to 4 and FIG. 12 show evaluation results of respective examples in Experiment 3. In Experiment 3, in the non-burst mode, glass articles were produced under different pulse width and pitch conditions. The conditions in each example are shown in Tables 3 to 4.

In Example 29, the irradiation conditions of the laser light were as follows: the optical system 2 was used, the laser light was irradiated in a non-burst mode, the pulse width (width LB in the present embodiment) was 32.9 ps, the interval between the pulsed light was 100 μs, and a pitch between modified portions (pitch P in the present embodiment) was 5 μm. Other conditions are as described above. The conditions of Examples 30 to 63 and 68 to 75 were the same as those of Example 29 except for the conditions shown in Table 3 or 4. The optical system 2 refers to the Smart Cleave High Efficiency Torch (hereinafter, abbreviated as HE) manufactured by Coherent Corp.

In Example 64, the irradiation conditions of the laser light were as follows: the optical system 3 was used, the laser light was irradiated in a non-burst mode, the pulse width (width LB in the present embodiment) was 20 ps, the interval between the pulsed light was 100 μs, and a pitch between modified portions (pitch P in the present embodiment) was 3 μm. Other conditions are as described above. The conditions of Examples 65 to 67 were the same as those of Example 64 except for the conditions shown in Table 4. The optical system 3 is a spherical plano-convex lens element made of synthetic quartz with a focal length of 15 mm, and refers to an optical system in which the laser light is incident on a flat surface side of the element and is emitted from a spherical surface side.

The unit energy in Tables 3 to 4 refers to the unit energy (value obtained by dividing the energy (μJ) of the pulsed light by the thickness (1.3 mm) of the base material 10) described in the present embodiment.

The same test as Experiment 2 was performed to measure the breaking stress.

Table 3

| | Optical system | Pulse mode | Pulse width (ps) | Pitch (μm) | Pulse energy (μJ) | Unit energy (μJ/mm) | Breaking stress (MPa) |
|---|---|---|---|---|---|---|---|
| | Conditions | | | | | | Evaluation |
| Ex. 29 | Optical system 2 | Non-burst | 32.9 | 5 | 468 | 360 | 16.37 |
| Ex. 30 | Optical system 2 | Non-burst | 32.9 | 6 | 561 | 432 | 18.72 |
| Ex. 31 | Optical system 2 | Non-burst | 32.9 | 7 | 561 | 432 | 17.65 |
| Ex. 32 | Optical system 2 | Non-burst | 32.9 | 10 | 748 | 575 | 13.34 |
| Ex. 33 | Optical system 2 | Non-burst | 32.9 | 12 | 748 | 575 | 19.90 |
| Ex. 34 | Optical system 2 | Non-burst | 40 | 3 | 374 | 288 | 24.68 |
| Ex. 35 | Optical system 2 | Non-burst | 40 | 4 | 374 | 288 | 22.84 |
| Ex. 36 | Optical system 2 | Non-burst | 40 | 5 | 561 | 432 | 17.35 |
| Ex. 37 | Optical system 2 | Non-burst | 40 | 6 | 561 | 432 | 16.10 |
| Ex. 38 | Optical system 2 | Non-burst | 40 | 8 | 561 | 432 | 12.23 |
| Ex. 39 | Optical system 2 | Non-burst | 40 | 10 | 561 | 432 | 9.63 |
| Ex. 40 | Optical system 2 | Non-burst | 40 | 13 | 748 | 575 | 22.18 |
| Ex. 41 | Optical system 2 | Non-burst | 40 | 12 | 748 | 575 | 19.05 |
| Ex. 42 | Optical system 2 | Non-burst | 50 | 3 | 374 | 288 | 21.68 |
| Ex. 43 | Optical system 2 | Non-burst | 50 | 2 | 374 | 288 | 18.58 |
| Ex. 44 | Optical system 2 | Non-burst | 50 | 5 | 468 | 360 | 19.07 |
| Ex. 45 | Optical system 2 | Non-burst | 50 | 4 | 468 | 360 | 18.43 |
| Ex. 46 | Optical system 2 | Non-burst | 50 | 7 | 561 | 432 | 17.01 |
| Ex. 47 | Optical system 2 | Non-burst | 50 | 6 | 561 | 432 | 18.18 |
| Ex. 48 | Optical system 2 | Non-burst | 50 | 10 | 748 | 575 | 12.67 |
| Ex. 49 | Optical system 2 | Non-burst | 50 | 12 | 748 | 575 | 17.51 |
| Ex. 50 | Optical system 2 | Non-burst | 60 | 10 | 561 | 432 | 19.62 |
| Ex. 51 | Optical system 2 | Non-burst | 60 | 5 | 561 | 432 | 14.02 |
| Ex. 52 | Optical system 2 | Non-burst | 60 | 3 | 561 | 432 | 24.92 |

Table 4

| | Optical system | Pulse mode | Pulse width (ps) | Pitch (μm) | Pulse energy (μJ) | Unit energy (μJ/mm) | Breaking stress (MPa) |
|---|---|---|---|---|---|---|---|
| | Conditions | | | | | | Evaluation |
| Ex. 53 | Optical system 2 . | Non-burst | 60 | 7 | 561 | 432 | 16.91 |
| Ex. 54 | Optical system 2 | Non-burst | 60 | 6 | 561 | 432 | 16.46 |
| Ex. 55 | Optical system 2 | Non-burst . | 60 | 4 | 561 | 432 | 18.70 |
| Ex. 56 | Optical system 2 | Non-burst | 68.5 | 5 | 973 | 748 | 15.91 |
| Ex. 57 | Optical system 2 | Non-burst | 68.5 | 7 | 973 | 748 | 13.52 |
| Ex. 58 | Optical system 2 | Non-burst | 68.5 | 9 | 973 | 748 | 11.01 |
| Ex. 59 | Optical system 2 | Non-burst | 68.5 | 11 | 973 | 748 | 10.07 |
| Ex. 60 | Optical system 2 | Non-burst | 68.5 | 13 | 973 | 748 | 11.86 |

(continued)

| | | Conditions | | | | | | Evaluation |
|---|---|---|---|---|---|---|---|---|
| | | Optical system | Pulse mode | Pulse width (ps) | Pitch (μm) | Pulse energy (μJ) | Unit energy (μJ/mm) | Breaking stress (MPa) |
| Ex. 61 | Optical system 2 | Non-burst | 68.5 | 15 | 973 | 748 | 12.95 |
| Ex. 62 | Optical system 2 | Non-burst | 68.5 | 17 | 973 | 748 | 12.26 |
| Ex. 63 | Optical system 2 | Non-burst | 68.5 | 20 | 973 | 748 | 11.71 |
| Ex. 64 | Optical system 3 | Non-burst | 20 | 3 | 829 | 638 | 13.24 |
| Ex. 65 | Optical system | Non-burst | 20 | 4 | 829 | 638 | 15.16 |
| Ex. 66 | Optical system 3 | Non-burst | 25 | 3 | 829 | 638 | 15.15 |
| Ex. 67 | Optical system 3 | Non-burst | 25 | 4 | 829 | 638 | 18.56 |
| Ex. 68 | Optical system 2 | Non-burst | 20.9 | 4 | 567 | 436 | 21.40 |
| Ex. 69 | Optical system 2 | Non-burst | 20.9 | 5 | 567 | 436 | 18.00 |
| Ex. 70 | Optical system 2 | Non-burst | 16.6 | 5 | 567 | 436 | 21.60 |
| Ex. 71 | Optical system 2 | Non-burst | 20.9 | 5 | 567 | 436 | 20.20 |
| Ex. 72 | Optical system 2 | Non-burst | 20.9 | 5 | 567 | 436 | 20.00 |
| Ex. 73 | Optical system 2 | Non-burst | 32.9 | 12 | 561 | 432 | 28.67 |
| Ex. 74 | Optical system 2 | Non-burst | 40 | 15 | 748 | 575 | 28.23 |
| Ex. 75 | Optical system 2 | Non-burst | 68.5 | 23 | 973 | 748 | 25.81 |

As shown in Tables 3 to 4 and FIG. 12, in the examples in which the relational expression $P \leq 0.25 \times LB + 3.5$ is satisfied, the maximum stress (hereinafter, referred to as breaking stress) at the time of breaking the base material could be 25 MPa or less.

Although the embodiments of the present invention have been described above, the embodiment is not limited to the contents of these embodiments. In addition, the components described above should include those that can be easily conceived by a person skilled in the art, those that are substantially the same, and those within a so-called equivalent scope. Further, the above components can be appropriately combined. Further, various omissions, substitutions, or modifications of the components can be made without departing from the gist of the embodiment described above.

The present application is based on a Japanese Patent Application (No. 2022-072576) filed on April 26, 2022, the contents of which are incorporated herein by reference.

REFERENCE SIGNS LIST

10: base material
10A, 10B: main surface
100: glass article
101: end surface
H, HA: modified portion
L: laser light
LB: width (pulse width)
T: virtual line

**Claims**

1. A method for producing a glass article, the method comprising:

irradiating pulse-oscillated laser light along a virtual line set on a main surface of a base material to form a plurality of modified portions along the virtual line in the base material; and

breaking the base material with the modified portions along the virtual line as starting points to cut out a portion from the base material and obtain a glass article, wherein

a minimum pulse interval of the laser light is more than 1 $\mu$s, and a pulse width of the laser light is 15 ps or more and 100 ps or less.

2. The method for producing a glass article according to claim 1, wherein a pitch P and a pulse width LB have the following relationship:

P ≤ 0.25 × LB + 3.5,

provided that P is a numerical value expressed in unit of $\mu$m, and LB is a numerical value expressed in unit of ps.

3. The method for producing a glass article according to claim 1 or 2, wherein the pulse width of the laser light is 15 ps or more and 60 ps or less.

4. The method for producing a glass article according to claim 1 or 2, wherein the laser light has a wavelength at which the laser light is transparent to the base material.

5. The method for producing a glass article according to claim 1 or 2, wherein a pitch of the plurality of modified portions is 1 $\mu$m or more and 23 $\mu$m or less when viewed from a direction perpendicular to the main surface of the base material.

6. The method for producing a glass article according to claim 1 or 2, wherein energy of one pulse of the laser light is 200 $\mu$J or more and 1500 $\mu$J or less per 1 mm thickness of the base material.

7. The method for producing a glass article according to claim 1 or 2, wherein when viewed from a direction perpendicular to the main surface of the base material, a pitch of the plurality of modified portions in a section where the virtual line is a curved line is smaller than a pitch of the plurality of modified portions in a section where the virtual line is a straight line.

8. The method for producing a glass article according to claim 1 or 2, wherein the modified portions are formed from the main surface of the base material to an opposite main surface.

9. The method for producing a glass article according to claim 1 or 2, wherein

when a position which is separated from a first main surface on one side toward a second main surface on an opposite side by a distance of 10% of a thickness of the glass article is defined as a first position, a length of a crack extending from a modified portion in a region from the first main surface to the first position is 12 $\mu$m or less, the length is in a direction parallel to the main surface of the glass article and orthogonal to the virtual line.

10. The method for producing a glass article according to claim 1 or 2, wherein the base material has a thickness of 0.7 mm or more.

11. The method for producing a glass article according to claim 1 or 2, wherein the base material has a fracture toughness value $K_{IC}$ of 0.6 (MPa·m$^{0.5}$) or more.

12. The method for producing a glass article according to claim 1 or 2, wherein a thickness of the base material is less than 3 mm, and each of the plurality of modified portions is formed by one time pulse irradiation.

13. The method for producing a glass article according to claim 1 or 2, wherein an optical system for irradiating the laser light is an aberration optical system.

14. A glass article having a main surface and an end surface, wherein

a plurality of linear modified portions extending in a thickness direction of the glass article are formed in the end surface, and a surface roughness Sa of the end surface, as specified in ISO 25178, is 0.6 $\mu$m or less.

15. The glass article according to claim 14, wherein

when a position, which is separated from a first main surface on one side toward a second main surface on an opposite side by a distance of 10% of a thickness of the glass article, is defined as a first position,
a length of a crack extending from a modified portion in a region from the first main surface to the first position is 12 μm or less, the length is in a direction orthogonal to the end surface.

16. The glass article according to claim 14 or 15, wherein

   when a position on the end surface which is separated from the first main surface on one side toward the second main surface on the opposite side by a distance of 10% of the thickness of the glass article is defined as a first position, and a position on the end surface which is separated from the second main surface toward the first main surface side by a distance of 10% of the thickness of the glass article is defined as a second position,
   a length of a crack extending from a modified portion in a region from the first position to the second position of the end surface is 7 μm or less, the length is in the direction orthogonal to the end surface.

17. The glass article according to claim 14 or 15, wherein a pitch of the modified portions is 1 μm or more and 23 μm or less when viewed from a direction perpendicular to the main surface.

18. The glass article according to claim 14 or 15, wherein when viewed from a direction perpendicular to the main surface, a pitch of the modified portions in a section where a line along the end surface is a curved line is smaller than a pitch of the modified portions in a section where the line along the end surface is a straight line.

19. The glass article according to claim 14 or 15, having a thickness of 0.7 mm or more.

20. The glass article according to claim 14 or 15, having a fracture toughness value $K_{IC}$ of 0.6 (MPa·m$^{0.5}$) or more.

FIG. 1

*FIG. 2*

EP 4 516 749 A1

*FIG. 3*

EP 4 516 749 A1

FIG. 4

EP 4 516 749 A1

*FIG. 5*

FIG. 6

*FIG. 7*

EP 4 516 749 A1

FIG. 8

FIG. 9

EP 4 516 749 A1

FIG. 10

EP 4 516 749 A1

FIG. 11

EP 4 516 749 A1

*FIG. 12*

CORRELATION BETWEEN PULSE WIDTH AND PITCH
EXAMPLES 29~75

EP 4 516 749 A1

<table>
<tr><td colspan="2">**INTERNATIONAL SEARCH REPORT**</td><td>International application No.<br><br>**PCT/JP2023/016027**</td></tr>
</table>

**A.    CLASSIFICATION OF SUBJECT MATTER**

*C03B 33/09*(2006.01)i; *B23K 26/53*(2014.01)i
FI:   C03B33/09; B23K26/53

According to International Patent Classification (IPC) or to both national classification and IPC

**B.    FIELDS SEARCHED**

Minimum documentation searched (classification system followed by classification symbols)

C03B33/00-33/14; B23K26/00-26/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-88474 A (NIPPON ELECTRIC GLASS CO) 10 June 2021 (2021-06-10) claims, paragraphs [0020], [0032], [0038], [0041]-[0044], [0052], drawings | 14, 17, 19-20 |
| A | | 15-16, 18 |
| X | WO 2021/100477 A1 (AGC INC.) 27 May 2021 (2021-05-27) paragraphs [0021], [0118]-[0125], fig. 1, 2 | 14, 17, 19-20 |
| A | | 15-16, 18 |
| A | JP 2007-331983 A (SONY CORP) 27 December 2007 (2007-12-27) paragraphs [0020]-[0021] | 1-13 |
| A | JP 2014-58425 A (VIA MECHANICS LTD) 03 April 2014 (2014-04-03) claims, paragraph [0014] | 1-13 |
| A | WO 2013/027645 A1 (ASAHI GLASS COMPANY, LIMITED) 28 February 2013 (2013-02-28) paragraphs [0018], [0029], fig. 1 | 1-13 |

☐ Further documents are listed in the continuation of Box C.        ☑ See patent family annex.

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **07 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" rowspan="2">INTERNATIONAL SEARCH REPORT<br>Information on patent family members</td><td colspan="2">International application No.<br><br>**PCT/JP2023/016027**</td></tr>
<tr></tr>
<tr>
<th>Patent document<br>cited in search report</th>
<th>Publication date<br>(day/month/year)</th>
<th>Patent family member(s)</th>
<th>Publication date<br>(day/month/year)</th>
</tr>
<tr>
<td>JP 2021-88474 A</td>
<td>10 June 2021</td>
<td>(Family: none)</td>
<td></td>
</tr>
<tr>
<td>WO 2021/100477 A1</td>
<td>27 May 2021</td>
<td>US 2022/0274211 A1<br>paragraphs [0051], [0147]-<br>[0172], fig. 1, 2<br>CN 114728832 A</td>
<td></td>
</tr>
<tr>
<td>JP 2007-331983 A</td>
<td>27 December 2007</td>
<td>(Family: none)</td>
<td></td>
</tr>
<tr>
<td>JP 2014-58425 A</td>
<td>03 April 2014</td>
<td>(Family: none)</td>
<td></td>
</tr>
<tr>
<td>WO 2013/027645 A1</td>
<td>28 February 2013</td>
<td>CN 103732550 A<br>KR 10-2014-0047626 A</td>
<td></td>
</tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6552503 B

- JP 2022072576 A

**Non-patent literature cited in the description**

- *NEW GLASS*, vol. 15 (22000), 18